(19) Europäisches Patentamt / European Patent Office / Office européen des brevets

(11) **EP 2 107 501 B1**

(12) **EUROPEAN PATENT SPECIFICATION**

(45) Date of publication and mention
of the grant of the patent:
**15.05.2013 Bulletin 2013/20**

(51) Int Cl.:
**G06K 9/00** (2006.01)

(21) Application number: **09154952.7**

(22) Date of filing: **12.03.2009**

(54) **Ridge direction extracting device, ridge direction extracting program, and ridge direction extracting method**

Rillenausrichtungsextraktionsvorrichtung, Rillenausrichtungsextraktionsprogramm und Rillenausrichtungsextraktionsverfahren

Dispositif d'extraction de direction d'arête, procédé d'extraction de direction d'arête, programme d'extraction de direction d'arête

(84) Designated Contracting States:
**DE FR**

(30) Priority: **25.03.2008 JP 2008079294**

(43) Date of publication of application:
**07.10.2009 Bulletin 2009/41**

(73) Proprietor: **NEC Corporation**
**Minato-ku**
**Tokyo 108-8001 (JP)**

(72) Inventor: **Hara, Masanori**
**Tokyo (JP)**

(74) Representative: **Betten & Resch**
**Theatinerstrasse 8**
**80333 München (DE)**

(56) References cited:
**JP-A- 2002 373 334      US-A- 5 869 822**
**US-A1- 2007 047 785**

- **M. LIU ET AL.: "Fingerprint reference-point detection" EURASIP JOURNAL ON APPLIED SIGNAL PROCESSING, vol. 4, 2005, pages 498-509, XP002542547**
- **M.H.G. YAZDI: "A robust structural fingerprint restoration" LECTURE NOTES IN COMPUTER SCIENCE, vol. 1311, 1997, pages 544-551, XP002542548**
- **DASS S C: "Markov Random Field Models for Directional Field and Singularity Extraction in Fingerprint Images" IEEE TRANSACTIONS ON IMAGE PROCESSING, IEEE SERVICE CENTER, PISCATAWAY, NJ, US, vol. 13, no. 10, 1 October 2004 (2004-10-01), pages 1358-1367, XP011118232 ISSN: 1057-7149**
- **WANG Y ET AL: "A Gradient Based Weighted Averaging Method for Estimation of Fingerprint Orientation Fields" 20 December 2005 (2005-12-20), DIGITAL IMAGE COMPUTING: TECHNQIUES AND APPLICATIONS, 2005. DICTA '05 . PROCEEDINGS DEC. 2005, PISCATAWAY, NJ, USA,IEEE, PAGE(S) 195 - 202 , XP010879346 ISBN: 978-0-7695-2774-1 * the whole document ***
- **N. RATHA AND R. BOLLE (EDS): "Automatic fingerprint recognition systems" 2003, SPRINGER , XP002542549 W. Shen et al. - Chapter 8, Section 8.6.1."Ridge segment following"**

**Description**

This application is based upon and claims the benefit of priority from Japanese patent application No. 2008-079294, filed on March 25, 2008.

BACKGROUND OF THE INVENTION

1. Field of the Invention

The present invention relates to a ridge direction extracting device, a ridge direction extracting program, and a ridge direction extracting method used for extracting the ridge directivities from images of fingerprints and palm prints by a unit of pixel.

2. Description of the Related Art

There have already been proposed various kinds of devices and methods for extracting the ridge directivities from images of fingerprints and palm prints.

For example, Japanese Unexamined Patent Publication 52-97298 (Patent Document 1) discloses a technique which utilizes the fact that in an image with a streaked pattern there is only a small fluctuation in the densities of a pixel in the direction same as that of the streaked pattern while there is a large fluctuation in the densities of the pixel in the direction that is orthogonal to the streaked pattern. With this, the technique disclosed in Patent Document 1 finds extreme values of the fluctuation amount of the densities with respect to a plurality of predetermined quantization directions, and determines the direction of the streaked pattern, i.e., the ridge direction, based on the extreme values.

Further, Japanese Unexamined Patent Publication 8-7097 (Patent Document 2) discloses a technique which determines the ridge direction by calculating a gradient vector in a pixel whose ridge direction is to be determined. Furthermore, Japanese Unexamined Patent Publication 2002-288641 (Patent Document 3) discloses a technique which conducts a two-dimensional Fourier transformation in a local area where the ridge direction, is to be determined, and analyzes the peak of the Fourier transformed space obtained as a result thereof to determine the ridge direction of that local area.

These known techniques are structured to extract the streaked pattern with the largest change in the densities. Thus, when there is a periodic noise in a direction that is different from the ridge direction, those techniques may mistakenly extract the direction of the noise as the ridge direction.

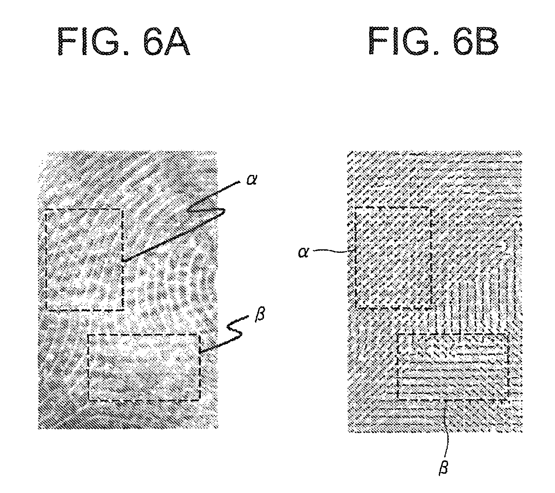

FIG. 6A and FIG. 6B show examples of the case where the periodic noise is mistakenly extracted as the ridge direction.

FIG. 6A is an original picture which shows a part of a fingerprint image having an area $\alpha$ in which there are many lines of ink blur extending upwardly towards the right side formed at a substantially fixed interval in the vertical direction, and having an are $\beta$ in which there are many lines of ink blur extending substantially in a horizontal manner formed at a substantially fixed interval in the vertical direction.

Such ink blur forms a streaked pattern while waving at a cycle close to the cycle of the fingerprint ridge. Moreover, the change in the densities of the pixel in the direction that is orthogonal to the direction of the ink blur is larger compared to the change in the densities of the pixel in the direction that is orthogonal to the real ridge direction. Thus, when the fingerprint ridge directivity is extracted by employing the known techniques, it is likely to mistakenly extract the direction of the ink blur as the ridge direction. As a result, as shown in FIG. 6B, for example, it happens that the correct ridge direction cannot be extracted because the areas $\alpha$ and $\beta$ are affected by the ink blur direction. In this example, slope of the ridge extracted from the area $\alpha$ of FIG. 6A becomes smaller than the actual slope of the ridge as in FIG. 6B because of an influence of the ink blur. Further, slope of the ridge extracted from the area $\beta$ of FIG. 6A becomes substantially horizontal regardless of the actual slope of the ridge as in FIG. 6B because of a strong influence of the ink blur.

As described above, it is difficult with the known techniques to extract the ridge directivities correctly from an image with a periodic noise. Therefore, there has been a demand for a ridge direction extracting device, a ridge direction extracting program, and a ridge direction extracting program, which are not easily affected by the influence of the noise.

Further, Japanese Unexamined Patent Publication 2007-65900 (paragraphs 0029 - 0031, FIG. 6: Patent Document 4) discloses a ridge extracting device which divides an image into a plurality of zones and obtains the ridge direction and the direction reliability by each zone by employing a known technique. However, it is not possible with this device to find the ridge direction by each pixel. Therefore, there is a limit in narrowing down the zone. Naturally, there is a limit in improving the detection accuracy of the ridge direction.

Other relevant prior art include:

M. Liu et al.: "Fingerprint reference-point detection" EURASIP Journal on Applied Signal Processing, vol. 4, 2005, pages 498-509

M.H.G. Yazdi: "A robust structural fingerprint restoration" Lecture Notes in Computer Science, vol. 1311, 1997, pages 544-551

Shen et al.: "Feature Extraction in Fingerprint Images", in "Automatic Fingerprint Recognition Systems", Ratha et al. (Eds), pp. 170-174, 2004

SUMMARY OF THE INVENTION

It is therefore an exemplary object of the present invention to provide a ridge direction extracting device, a ridge direction extracting program, and a ridge direction extracting method, which can extract the ridge directivities correctly and precisely by suppressing a bad influence of a periodic noise, according to the steps of appended claims.

BRIEF DESCRIPTION OF THE DRAWINGS

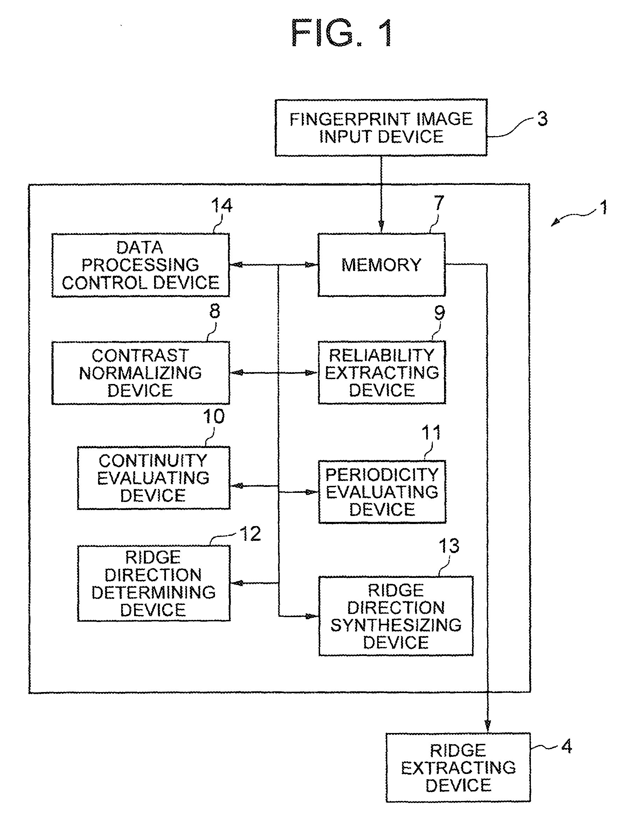

FIG. 1 is a functional block diagram showing a schematic structure of a ridge direction extracting device according to an exemplary embodiment to which the invention is applied;

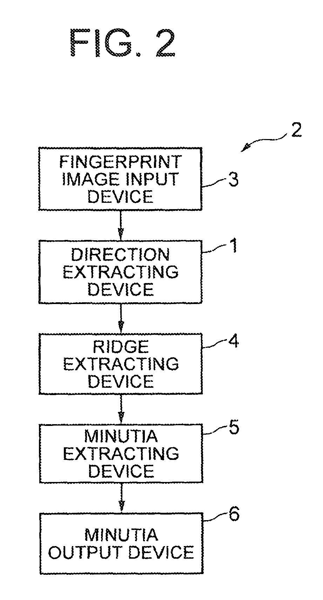

FIG. 2 is a block diagram showing a structure of a minutia extracting system that is built by utilizing the ridge direction extracting device of the exemplary embodiment;

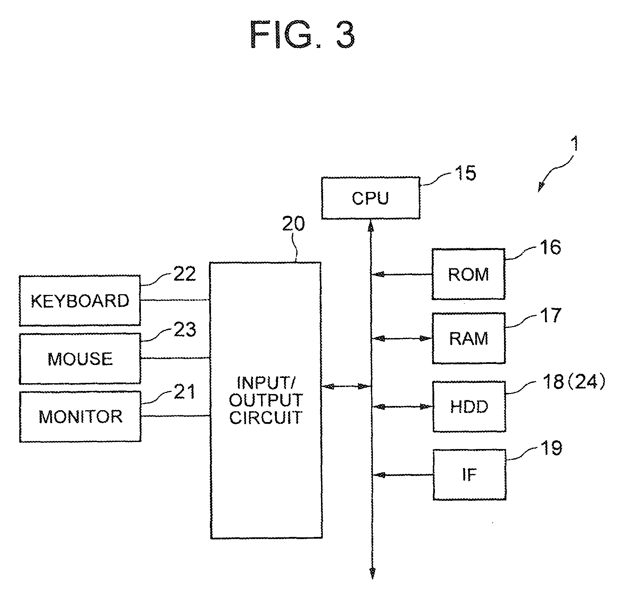

FIG. 3 is a simplified block diagram which shows a ridge direction extracting device that is configured with a typical computer;

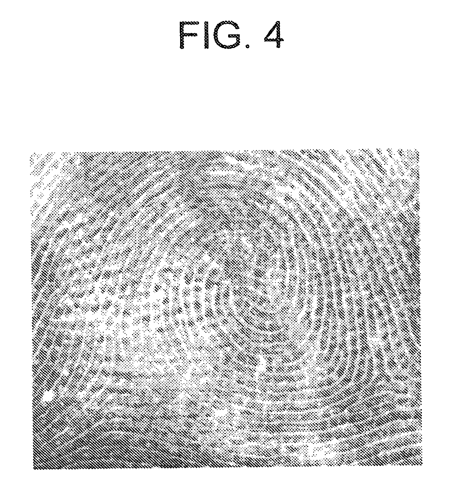

FIG. 4 is an illustration showing an example of an original image that is temporarily stored in a memory;

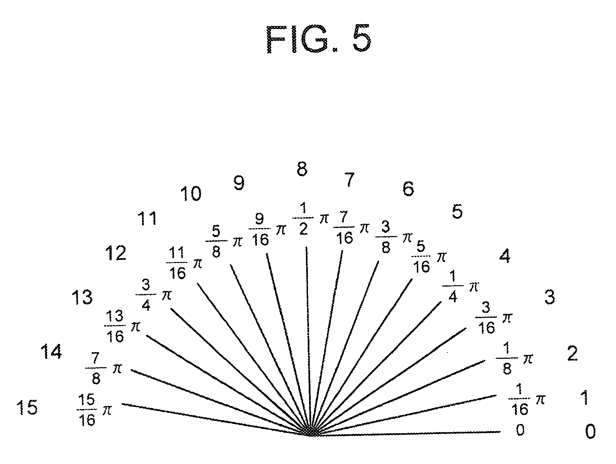

FIG. 5 is a conceptual diagram showing a definition of ridge directions;
FIGS. 6A and 6B are illustrations showing an example of a case where a periodic noise is mistakenly extracted as a ridge direction, in which FIG. 6A shows an original image of a fingerprint and FIG. 6B shows the ridge directions that are mistakenly extracted;

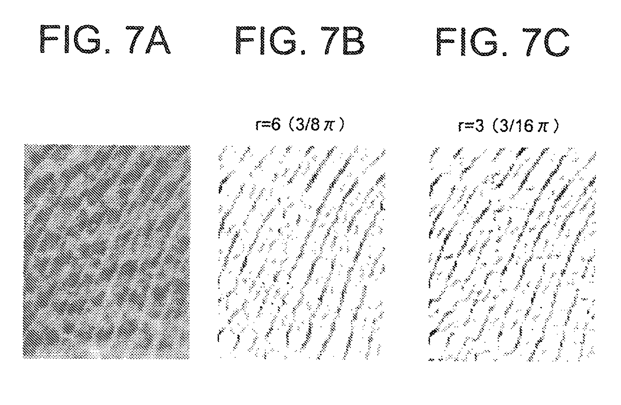

FIGS. 7A - 7C show conceptual diagrams showing extraction of ridge directions performed at the point where processing of a reliability extracting device is completed, in which FIG. 7A shows an extraction area, FIG. 7B is a conceptual diagram in which the extraction result of the ridge direction corresponding to a direction code r (6) obtained based on directivity reliability C (6) by each pixel (x, y) is replaced with densities of an image, and FIG. 7C is a conceptual diagram in which the extraction result of the ridge direction corresponding to a direction code r (3) obtained based on directivity reliability C (3) by each pixel (x, y) is replaced with densities of an image;

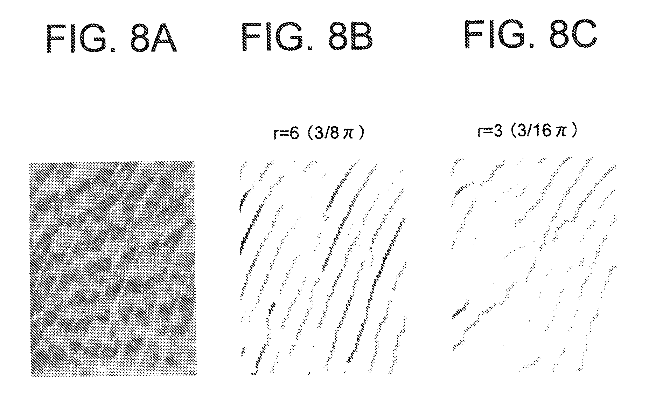

FIGS. 8A - 8C show conceptual diagrams showing extraction of ridge directions performed at the point where processing of a continuity evaluating device is completed, in which FIG. 8A shows an extraction area, FIG. 8B is a conceptual diagram in which the extraction result of the ridge direction corresponding to a direction code r (6) obtained based on directivity reliability C2 (6) by each pixel (x, y) is replaced with densities of an image, and FIG. 8C is a conceptual diagram in which the extraction result of the ridge direction corresponding to a direction code r (3) obtained based on directivity reliability C2 (3) by each pixel (x, y) is replaced with densities s of an image;

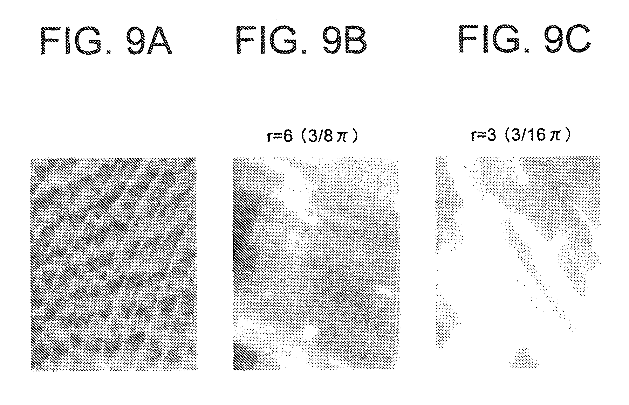

FIGS. 9A - 9C show conceptual diagrams showing periodicity reliability observed at the point where processing of a periodicity evaluating device is completed, in which FIG. 8A shows an extraction area, FIG. 9B is a conceptual diagram in which the periodicity reliability of the direction corresponding to a direction code r (6) obtained based on periodicity reliability dF (6) by each pixel (x, y) is replaced with densities of an image, and FIG. 9C is a conceptual diagram in which the periodicity reliability of the direction corresponding to a. direction code r (3) obtained based on periodicity reliability dF (3) by each pixel (x, y) is replaced with densities of an image;

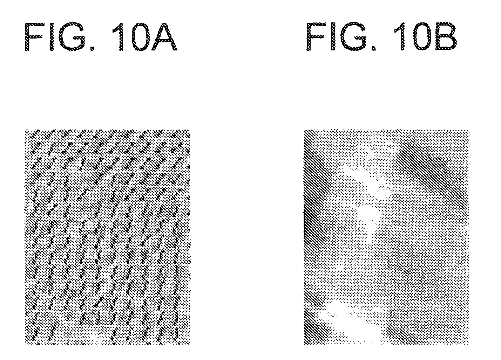

FIGS. 10A and 10B show conceptual diagrams related to the ridge directions and the directivity reliability observed at the point where processing of a ridge direction determining device is completed, in which FIG. 10A shows an image of a corresponding relation between positions of each pixel and ridge directions of each pixel and FIG. 10B shows a corresponding relation between the positions of each pixel and directivity reliability values of each pixel;

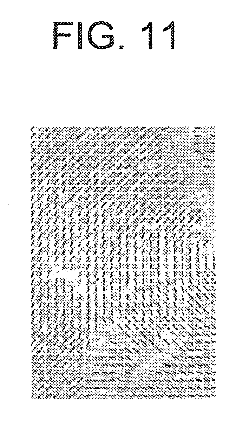

FIG. 11 is a conceptual diagram showing the whole area of the ridge directions observed at the point where processing of the ridge direction determining device is completed;

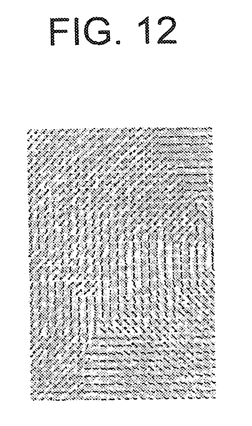

FIG. 12 is a conceptual diagram showing the whole area of the ridge directions observed at the point where processing of a ridge direction synthesizing device is completed;

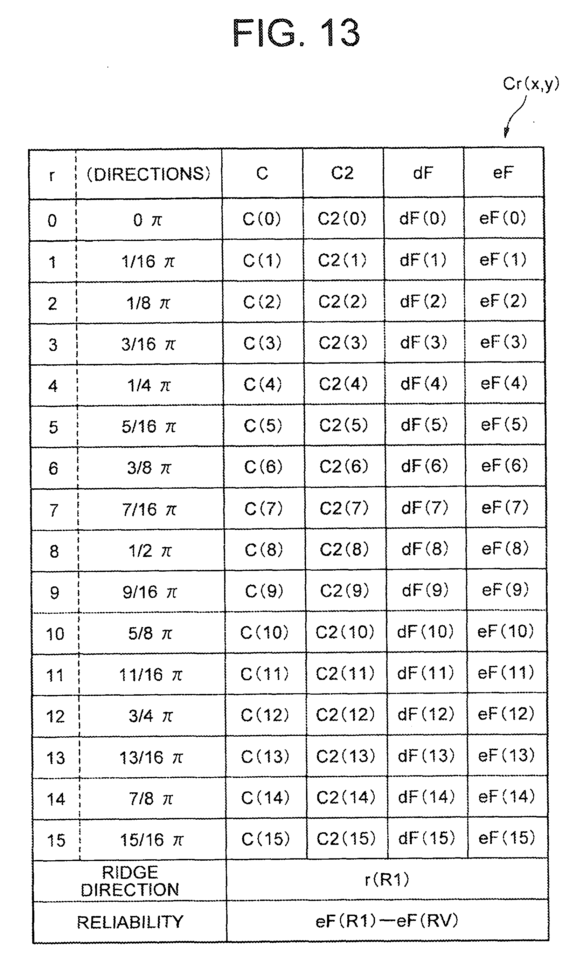

FIG. 13 is a conceptual diagram showing an example of a logic structure of a table;

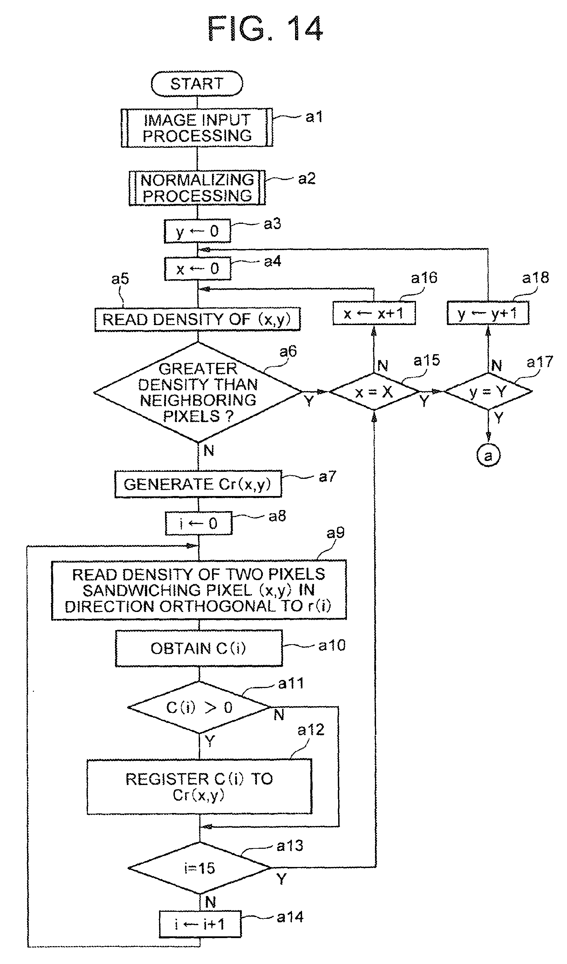

FIG. 14 is a flowchart showing a flow of the overall processing performed in a ridge direction extracting method and a ridge direction extracting program according to the exemplary embodiment, which mainly shows processing operations of a microprocessor which functions as a "contrast normalizing device" and a "reliability extracting device";

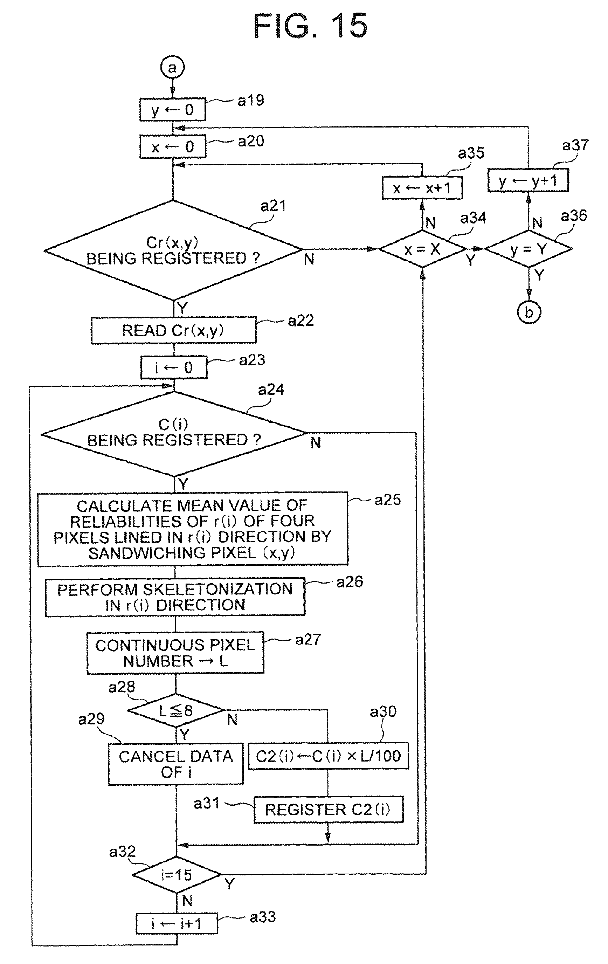

FIG. 15 is a flowchart showing a following flow of the overall processing performed in the ridge direction extracting method and the ridge direction extracting program according to the exemplary embodiment, which mainly shows processing operations of the microprocessor which functions as a "continuity evaluating device";

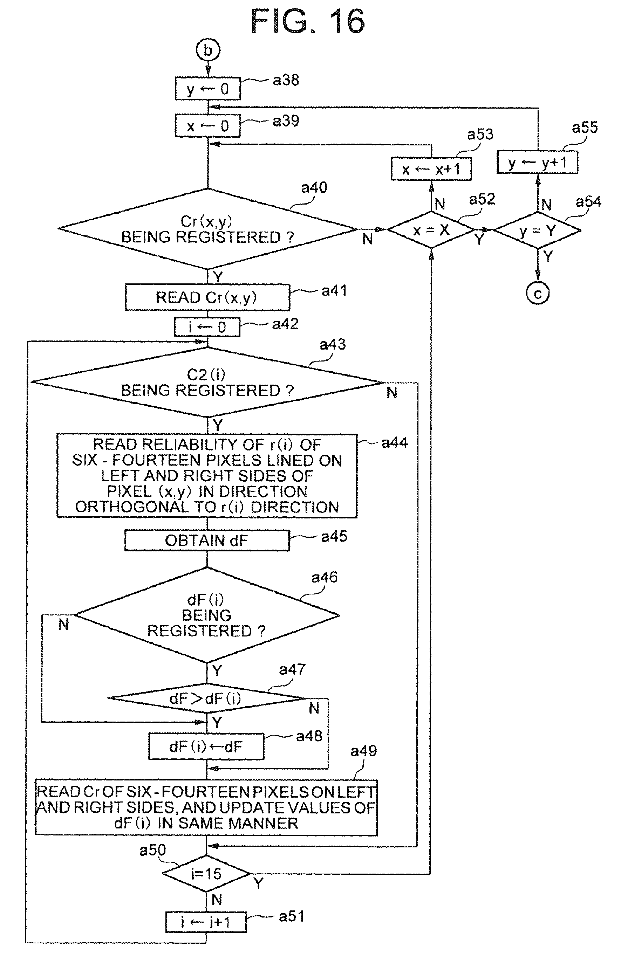

FIG. 16 is a flowchart showing a following flow of the overall processing performed in the ridge direction extracting method and the ridge direction extracting program according to the exemplary embodiment, which mainly shows processing operations of the microprocessor which functions as a "periodicity evaluating device";

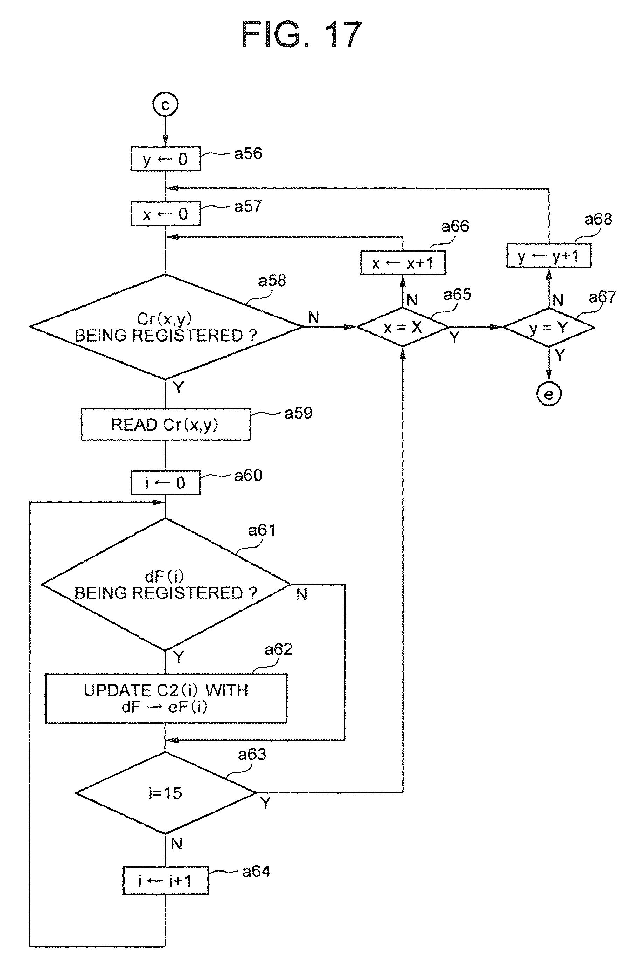

FIG. 17 is a flowchart showing a following flow of the overall processing performed in the ridge direction extracting method and the ridge direction extracting program according to the exemplary embodiment, which mainly shows processing operations of the microprocessor which functions as a "periodicity evaluating device";

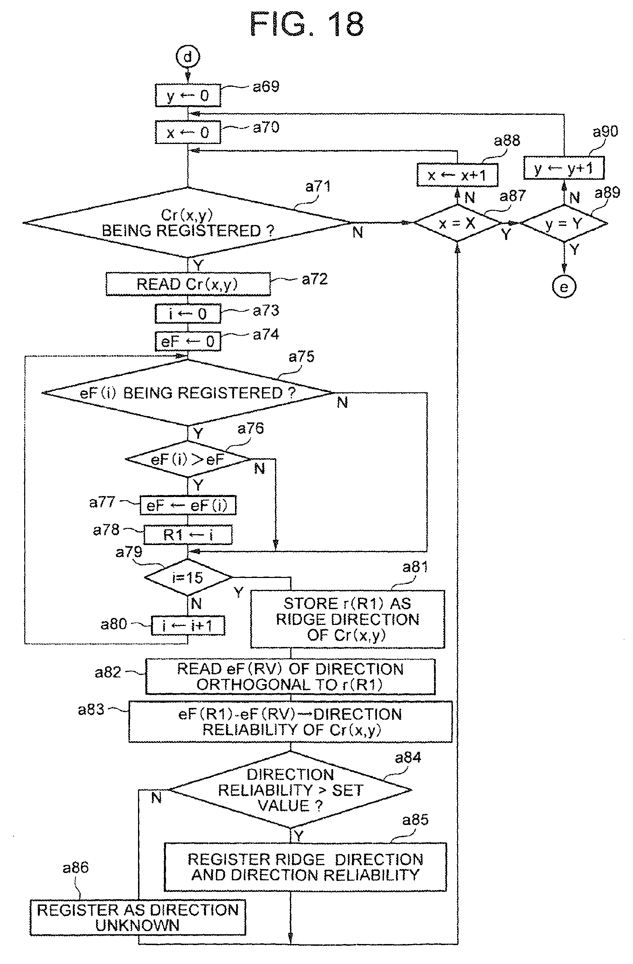

FIG. 18 is a flowchart showing a following flow of the overall processing performed in the ridge direction extracting method and the ridge direction extracting program according to the exemplary embodiment, which mainly shows processing operations of the microprocessor which functions as a "ridge direction determining device"; and

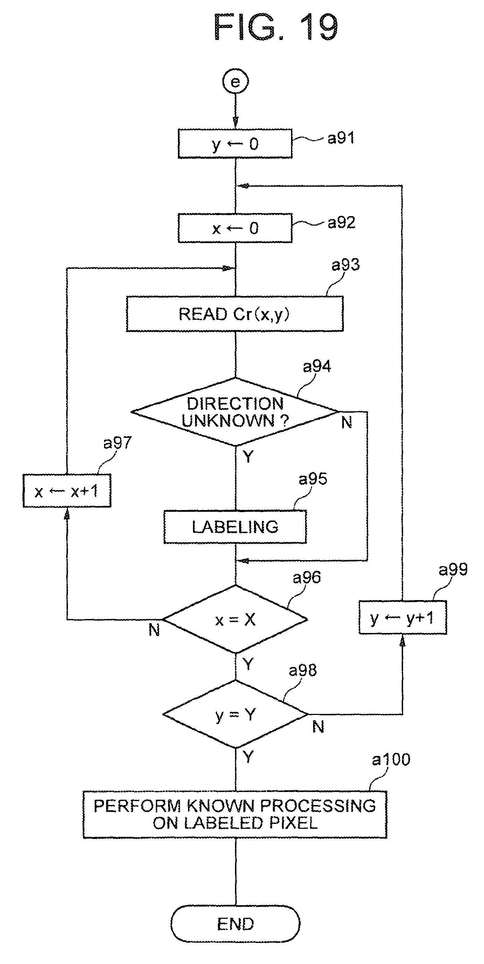

FIG. 19 is a flowchart showing a following flow of the overall processing performed in the ridge direction extracting method and the ridge direction extracting program according to the exemplary embodiment, which mainly shows processing operations of the microprocessor which functions as a "ridge direction synthesizing device".

## DETAILED DESCRIPTION OF THE EXEMPLARY EMBODIMENTS

Next, best modes for embodying the present invention will be described in a concretive manner by referring to the accompanying drawings.

FIG. 1 is a functional block diagram showing a schematic structure of a ridge direction extracting device 1 according to an exemplary embodiment to which the present invention is applied. Further, FIG. 2 is a block diagram showing a structure of a minutia extracting system 2 that is built by utilizing the ridge direction, extracting device 1 of the exemplary embodiment.

The minutia extracting system 2 is for obtaining minutia data of a fingerprint and a palm print by reading images of a fingerprint and a palm print. As shown in FIG. 2 , the minutia extracting system 2 includes: a fingerprint image input device 3 that is configured with a sensor or a scanner for fetching fingerprint images or palm print images or a data reading device for reading images that are put into an electronic file; the ridge direction extracting device 1 for extracting ridge directions from the image inputted via the fingerprint image input device 3; a ridge extracting device 4 which extracts fingerprint ridges from the fingerprint image by using the ridge direction data extracted by the ridge direction extracting device 1; a minutia extracting device 5 which extracts minutiae from the ridges extracted by the ridge extracting device 4; and a minutia output device 6 which outputs the minutia data extracted by the minutia extracting device 5.

Among those devices, the fingerprint image input device 3 , the ridge extracting device 4, the minutia extracting device 5, and the minutia output device 6 are already-known techniques, so that specific explanations thereof are omitted.

The ridge direction extracting device 1 which configures the main part of the minutia extracting system 2 is for extracting a ridge by a unit of pixel from the fingerprint image or palm print image inputted from the fingerprint image input device 3. More specifically, the ridge direction extracting device 1 is for extracting the directivity of a valley line that configures the ridge, As shown in FIG. 1, the ridge direction extracting device 1 includes; a memory 7 for storing data; a contrast normalizing device 8; a reliability extracting device 9; a continuity evaluating device 10; a periodicity evaluating device 11; a ridge direction determining device 12; a ridge direction synthesizing device 13; and a data processing control device 14.

The memory 7 functions as a frame memory for temporarily storing the fingerprint images and palm print images inputted via the fingerprint image input device 3 and functions as a temporary storage memory of arithmetic data.

Further, this exemplary embodiment is structured to generate, by utilising a part of the storage area of the memory 7, a table $Cr(x, y)$ for temporarily storing directivity reliabilities as well as directivity reliabilities updated according to continuity directivities, periodicity reliabilities, and final reliabilities updated according to the continuity reliabilities and the periodicity reliabilities for each of the pixels configuring the image and by each of the directions set in advance (see FIG. 13).

The contrast normalizing device 8 is a device for obtaining a uniform dynamic range by normalizing the contrasts of the whole areas of the image through highlighting the image in an area where a difference in the densities of the fingerprint image or the palm print image is small (i.e., the image of the area with narrow dynamic range) among the images temporarily stored in the memory 7. The functions thereof are already known. For example, the known techniques are a local histogram equalization method and a local contrast stretching method.

Now, an example of the image that is fetched by the fingerprint image input device 3 and temporarily stored in the memory 7 is shown in FIG. 4. Note here that this image is an original image before being normalized.

The image of FIG. 4 is an image digitalized with resolution of 500 dpi according to ANSI/NIST-ITL-1-2000 Data Format for the Interchange of Fingerprint, Fiscal, & Scar Mark & Tattoo (SMT) Information that is standardized by US National Institute of Standards and Technology. In the aforementioned Standards, images are digitalized to have two hundred fifty six gradations of density values from 0 to 255. The density values are defined with a luminance standard with which the larger luminance (brighter) is expressed with a larger numerical value. For the sake of explanations, however, this exemplary embodiment employs a density standard for expressing the density values, with which the darker density is expressed with a larger numerical value. Therefore, a ridge part with a darker density (darker color) takes a value close to the maximum value 255, while the paper part and a valley-line part with less density (lighter color) takes a value close to 0. Further, it is assumed that there are X-number of pixels in the horizontal direction, and. Y-number of pixels in the perpendicular direction in the image fetched by the memory 7 that functions as the frame memory.

The reliability extracting device 9 operates to: read the fingerprint image or the palm print image normalized by the contrast normalizing device 8 from the memory 7; sequentially select some directions set in advance for each of the pixels (x, y) (x = 0, 1, 2, ---, X, y = 0, 1, 2, ---, Y) extracted from the image, i.e., sixteen direction codes r(i) (i = 0, 1, 2, ---, 15) by a unit of 1/16 $\Pi$rad. from a direction code r(0) that corresponds to 0 $\Pi$rad. with respect to the horizontal line to a direction code r(15) that corresponds to 15/16 $\Pi$rad. with respect to the horizontal line in this exemplary embodiment, and assume that every time the ridge directivity of the extracted pixel (x, y) is consistent with the direction code r(i) that is selected at that point; obtain by each direction code r(i)the directivity reliability C(i) that shows the probability of the direction code r(i) being consistent with the ridge directivity of the extracted pixel (x, y) based on a difference between the density of the pixel (x, y) and the densities of some pixels neighboring to the pixel (x, y) from the direction orthogonal to the selected direction code r(i), i.e., neighboring to the pixel (x, y) from the left and right sides; and temporarily store the corresponding relation between the preset direction, i.e., the direction code r(i), and the directivity reliability C(i) to a table Cr (x, y) provided for each pixel (x, y).

In this exemplary embodiment, however, the processing for obtaining the directivity reliability C(i) is not performed on all the pixels (x, y) of x = 0, 1, 2, ---, X and y = 0, 1, 2, ---, Y. In order to speed up the processing, the processing for obtaining the directivity reliability C(i) is omitted for the pixel having obviously darker density than the peripheral pixels, i.e., the pixel that is highly possible not to be the structural elements of a valley. Further, the processing for creating the table Cr(x, y) for the pixel (x, y) is not performed, either.

The directivity reliability C(i) is a numerical value expressing the probability of being considered as the valley. At the same time, it can be taken as the reliability of the ridge direction of a vicinity area including the ridge.

Now, the ridge direction will be described. A direction is mathematically defined as an inclination having its course. The inclination of the ridge has no course. Thus, it is not appropriate in a strict sense to express the inclination of the ridge as a direction. However, the inclination of the ridge is expressed as the ridge direction in many cases, so that the term "ridge direction" is employed herein as well. As the ridge directions, the area is quantized by 1/8 $\Pi$rad. to be coded into eight directions or quantized by 1/16 $\Pi$ rad. to be coded into sixteen directions in many cases. With the sixteen directions, the accuracy is more improved than the case of directions while the processing time becomes longer. As described above, this exemplary embodiment specifies the ridge directivities in sixteen directions as in FIG. 5, i.e., by a unit of 1/16 $\Pi$rad. from a direction code r(0) that corresponds to 0 $\Pi$rad. with respect to the horizontal line to a direction code r(15) that corresponds to 15/16 $\Pi$rad. with respect to the horizontal line. When the ridge direction is expressed as a positive direction and a negative direction, it is defined that the direction radiated from the original point as shown Fig.5 is the right direction.

The ridge direction may sometimes be defined by each pixel (x, y) or may sometimes be defined by a block unit of 4×4 pixels, 8×8 pixels, and the like. This exemplary embodiment will be described while assuming that the ridge direction is defined by a unit of single pixel. Further, when drawing the ridge directions, an area of sight pixels in the horizontal direction and in the perpendicular direction is sampled for making it easier to be observed.

The continuity evaluating device 10 operates to: obtain the continuity reliability of the direction code r(i) regarding the pixel (x, y) based on the number of pixels continued from the pixel (x, y) in the direction that is the same as the direction code r(i) selected at that point; add a weight proportional to the continuity reliability by each direction code r(i) to update the directivity reliability C(i) stored in the tables Cr(x, y) by corresponding to the direction code r (i) to the directivity reliability C2(i); and update and store the value to the table Cr(x, y) or additionally store the value to the table Cr(x, y).

That is, when the value of the continuity reliability corresponding to a specific direction code r(i) is large, it is highly possible that the pixel group forming the valley continues along the assumed direction code r(i).

The periodicity evaluating device 11 operates to: successively select, the sixteen direction codes r(i) (i = 0, 1, 2, ---, 15) for each of the pixels (x, y) extracted from the image, and assumes every time that the ridge directivity of the pixel (x, y) is consistent with the direction code r(i) that is selected at that point; obtains the probability of having another ridge close to the pixel (x, y) as the periodicity reliability dF(i) based on the values of the directivity reliability C2(i) in the direction codes r(i) of some pixels close to the pixel (x, y) in the direction orthogonal to the direction code r(i), i.e., close to the pixel (x, y) from the right and left sides; add a weight proportional to the periodicity reliability dF(i) by each direction code r(i) to update the values of the directivity reliability C2 (i) stored in the table Cr (x, y) by corresponding to the direction code r (i) to the final reliability eF(i); and update and store the value to the table Cr(x, y) or additionally store the value to the table Cr(x, y).

In short, this processing is for checking whether or not there is any other pixel having the same directivity in the left and right directions of the pixel (x, y), i.e., orthogonal to the direction code r (i). If there are pixels that are highly possible to be the structural elements of the valley with lower density compared to the peripheral pixels (i.e., the pixel whose table Cr is being created) found within a range of typical ridge spaces both on the left and right sides, it can be judged that there is a periodicity as the valley between the pixels on the left and right sides of that pixel (x, y).

In this exemplary embodiment, the periodicity reliability dF(i) determined based on the directivity reliabilities C2(i) of the total of three pixels (including the target pixel (x, y) and the pixels on the left and right sides thereof) is obtained, and the periodicity reliability is registered to the tables Cr of all the pixels existing between the pixels on the left and right sides.

The ridge direction determining device 12 operates to: search the final reliability maximum value eF among the sixteen final reliabilities eF(i) (i = 0, 1, 2, ---, 15) stored in the tables Cr(x, y) of each pixel (x, y); determine the direction code r(R1) corresponding to the final reliability maximum value eF of as the ridge directivity of the pixel (x, y); and store it to the tables Cr(x, y) of each pixel (x, y).

Further, the ridge direction determining device 12 operates to: obtain a difference between the reliability eF(R1) of the direction code r(R1) whose reliability becomes the and the reliability eF corresponding to the ridge direction of a direction RV that is orthogonal to the direction code r(R1) whose reliability becomes the maximum (eF(R1)-eF (RV)); take the value as the reliability of the pixel (x, y), and consider that the ridge directivity regarding the pixel whose reliability is smaller than the set value is unknown; and store a code indicating that the direction is unknown, instead of the direction code r(R1).

This exemplary embodiment employs the sixteen directions, so that RV can be calculated with a following expression. Note that MOD is a function for obtaining a remainder when (R1+8) is divided by 16.

$$RV = MOD(R1+8, \ 16)$$

The ridge direction synthesizing device 13 has a function of a known ridge direction extracting device built-in thereto, which operates to: extract, from the original image, all the pixels (x, y) judged as having the unknown directivity by the ridge direction determining device 12; obtain the directivities of the ridges of the pixels (x, y) whose directivities are unknown by employing the techniques disclosed in Patent Document 1, Patent Document 2, or the like, for example; combine those with the result obtained by the ridge direction determining device 12 and temporarily store it to the memory 7 as a final result; and give the final result to the ridge extracting device 4.

However, compared to the reliability of the ridge directivity determined by the ridge direction determining device 12, the reliability of the ridge directivity of the part obtained by the ridge direction synthesizing device 13 becomes lower.

The data processing control device 14 is a control device for controlling the timing of the processing operations performed by the contrast normalizing device 8, the reliability extracting device 9, the continuity evaluating device 10, the periodicity evaluating device 11, the ridge direction determining device 12, and the ridge direction synthesizing device 13.

An example of the logic structure of the table Cr(x, y) created by corresponding to the position (x, y) of the pixel is shown in FIG. 13.

As has been already described, the table Cr(x, y) is created for each of the pixels (x, y) which form an image. The table Cr(x, y) temporarily stores: some directions set in advance, i.e., sixteen direction codes r(i) (i = 0, 1, 2, ---, 15); the directivity reliabilities C(i) for each direction code r(i); the directivity reliabilities C2(i) updated by adding a weight based on the continuity reliability; the periodicity reliabilities dF(i); the final reliabilities eF(i) that are updated according to the continuity reliabilities and the periodicity reliabilities; the direction code r(R1) indicating the ridge direction or a code indicating that the direction is unknown; and the reliability (eF(R1) - eF(RV)) which indicates the reliability of the direction code r(R1) showing the ridge direction of the pixel (x, y),

However, it is not necessary to have all the data temporarily stored in the table. For example, the directivity reliability C(i) that is updated by adding a weight according to the continuity reliability may be erased at the point where the arithmetic operation of the directivity reliability C2 (1) is completed.

Specifically, the ridge direction extracting device 1 can be configured with a typical computer or the like shown in FIG. 3, for example.

As shown in FIG. 3, the ridge direction extracting device 1 configured with the personal computer or the like includes: a microprocessor 15 used for arithmetic processing; a ROM 16 to which a basic control program for the microprocessor 15 is stored; a large-capacity RAM 17 used for temporarily storing data, etc; a storage device 18 configured with a hard disk drive and the like to which various kinds of application programs and the like are stored; and an interface 19 for connecting to the fingerprint image input device 3 and the ridge extracting device 4. Further, a monitor 21, a keyboard 22, a mouse 23, and the like functioning as man-to-machine interfaces are connected to an input/output circuit 20 of the microprocessor 15.

In the ridge direction extracting device 1 configured with the personal computer or the like, the microprocessor 15 which has a ridge direction extracting program 24 stored in the storage device 18 and is controlled by the ridge direction extracting program 24 loaded on the RAM 17 as an execution-target program functions as the contrast normalizing device 8, the reliability extracting device 9, the continuity evaluating device 10, the periodicity evaluating device 11, the ridge direction determining device 12, the ridge direction synthesizing device 13, and the data processing control device 14. Further, the large-capacity RAM 17 functions as the above-described memory 7 used for storing data.

In FIG. 2, the ridge direction extracting device 1, the ridge extracting device 4, the minutia extracting device 5, and the minutia output device 6 are illustrated as individual hardware parts for the sake of explanations. Practically, however, those devices can altogether be configured with a single personal computer or the like. Further, the contrast normalizing device 8, the reliability extracting device 9, the continuity evaluating device 10, the periodicity evaluating device 11, the ridge direction determining device 12, the ridge direction synthesizing device 13, and the data processing control device 14 configuring the ridge direction extracting device 1 may be achieved by having the program executed by the microprocessor of the computer.

FIG. 14 - FIG. 19 are flowcharts which specifically show the processing operations performed by the microprocessor 15 which functions as the contrast normalizing device 8, the reliability extracting device 9, the continuity evaluating device 10, the periodicity evaluating device 11, the ridge direction determining device 12, the ridge direction synthesizing device 13, and the data processing control device 14.

Next, the flows of the overall processing performed by the ridge direction extracting method and the ridge direction extracting program 24 according to the exemplary embodiment will be described by referring to FIG. 14 - FIG. 19.

First, a fingerprint image or a palm print image is read by the fingerprint image input device 3 and the image is digitalized, while the digitalized image data is stored to a frame memory of the memory 7 that is formed with the RAM 17 (step a1 of FIG. 14).

As has been described above, it is also possible to store an image file that is digitalized in advance to the frame memory of the memory 7 without using the fingerprint image input device 3.

Then, the microprocessor 15 functioning as the contrast normalizing device 8 provides a uniform dynamic range over the whole areas of the image in the frame memory by highlighting the areas of the image having a small difference in the densities of the image, i.e., the areas with a narrow dynamic range, and restores the normalized image data to the frame memory of the memory 7 (step a2).

Then, the microprocessor 15 functioning as the data processing control device 14 initializes both values of indexes y, x used for extracting a pixel from the frame memory of the memory 7 to 0 (step a3, step a4), and reads the density of the pixel (x, y) that is specified by the values of the indexes x, y from the frame memory of the memory 7 (step a5).

Thereafter, the microprocessor 15 compares the density of the pixel (x, y) and the densities of the peripheral pixels to judge whether the density of the pixel (x, y) is darker than the densities of the peripheral pixels, i.e., judge whether or not it is highly possible for the pixel (x, y) to be the structural element of a valley (step a6).

As has been described above, when the density of the pixel (x, y) is darker than the densities of the peripheral pixels, the probability of the pixel (x, y) to be the structural element of the valley is low. When the density of the pixel (x, y) is lighter than the densities of the peripheral pixels, the probability of the pixel (x, y) to be the structural element of the valley is high.

When the result of judgment in step a6 is true and it is judged that the probability of the pixel (x, y) to be the structural element of the valley is low, the processing from step $a^7$ to step a14 is not executed for speeding up the processing. Further, the processing for creating the table Cr(x, y) that corresponds to the pixel (x, y) as well as the processing related to calculating and storing the directivity reliability C(i) regarding the pixel (x, y) is omitted.

In this case, the microprocessor 15 functioning as the data processing control device 14 immediately increments the value of the index x used for extracting the pixel from the frame memory of the memory 7 by 1 (step a15), and moves on to read the density of the next pixel (x, y).

In the meantime, when the result of judgment in step a6 is false, i.e., when it is judged that the probability of the pixel (x, y) to be the structural element of the valley is high, the microprocessor 15 functioning as the data processing device 14 creates the table Cr(x, y) that corresponds to the pixel (x, y) within the data storage area of the memory 7 (step a7, see FIG. 13).

Subsequently, the microprocessor 15 functioning as the reliability extracting device 9 operates to: initialize the value of index i for specifying the direction code r to 0 (step a8); read the direction code r(i) corresponding to the index i while assuming that the ridge direction of the pixel (x, y) is consistent with the direction code r(i); read the densities of some pixels that are neighboring to the pixel (x, y) in the direction orthogonal to the direction code r(i), i.e., the pixels neighboring to the pixel (x, y) from the left and right sides (step a9): and obtain the value of the directivity reliability C(i) which shows the probability of the ridge directivity of the pixel (x, y) being consistent with the direction code r (i) based on a difference between the densities of the neighboring pixels and the density of the pixel (x, y) (step a(0).

In particular, in this exemplary embodiment, the directivity reliability C(i) is obtained by executing the arithmetic processing of Expression 1 in the processing of step a10 by utilizing the density of the pixel (x, y) as the evaluation target and the densities of the neighboring pixels of two each in the direction orthogonal to the direction code r(i), i.e. , the neighboring pixels of two each in the left and right sides of the pixel (x, y).

$$C(i) = \min(f(1), f(-1)) \times k1 + \min(f(2), f(-2)) \times (1-k1)$$

$$--- \text{Expression 1}$$

where,

$$f(1) = \max(d(1) - d(0), 0)$$

$$f(-1) = \max(d(-1) - d(0), 0)$$

$$f(2) = \max(d(2) - d(0), f(1))$$

$$f(-2) = \max(d(-2) - d(0), f(-1))$$

k1: weight parameter (arbitrary numerical value between 0 and 1; 0.6 is employed in this exemplary embodiment)
d(0): density of pixel (x, y)
d(1) : density (has been read in the processing of step a9) of the neighboring pixel (pixel with a scanning distance of 1) on the right side of the pixel (x, y) with respect to the direction code r(i)
d(-1) : density (has been read in the processing of step a9) of the neighboring pixel (pixel with a scanning distance of 1) on the left side of the pixel (x, y) with respect to the direction code r(i)
d(2) : density (has been read in the processing of step a9) of the second neighboring pixel (pixel with a scanning distance of 2) on the right side of the pixel (x, y) with respect to the direction code r(i)
d(-2) : density (has been read in the processing of step a9) of the second neighboring pixel (pixel with a canning distance of 2) on the left side of the pixel (x, y) with respect to the direction code r(i)

Note here that "f(1)" and "f(-1)" take positive numbers only when the density of the pixel (x, y) is less than the densities of the neighboring pixels. Further, "f(2)" and "f(-2)" are the values calculated from the two neighboring pixels.
When width of a valley (valley line) is narrow, the value of the directivity reliability c(i) takes a large value with a calculation of Expression 1 described above when the assumed direction code r(i) is along the actual ridge direction. Further, the value of the directivity reliability C(i) takes a small value when the assumed direction code r(i) is not along the actual ridge direction. Thus, it is possible to judge whether or not the assumed direction code r(i) is along the actual ridge direction based on the value (large or small) of the directivity reliability C(i).
Further, when the width of the valley (valley line) is narrow (e.g., the width of the valley is one pixel), the density of the pixel forming the valley is lighter than the densities of the pixels neighboring to that pixel on the left and right sides. Thus, it is possible to extract the valley easily only with a comparison of the densities without conducting any special calculation. Furthermore, when such narrow valley continues, the direction of the ridge can be extracted relatively easily by checking the continuity of the extracted pixel. As a result, the ridge direction can be extracted. In this exemplary embodiment, it is assumed that the width of the valley (valley line) is within three pixels. Therefore, the ridge can be extracted by making a comparison of a total of five pixels (including the pixel (x, y) and two pixels each in the left and right directions orthogonal to the direction code r(i) of the pixel (x, y)).
Further, one of the simplest methods for obtaining the directivity reliability C(i) that can be used instead of the processing of Expression 1 is a method which extracts the ridge direction when the density of the pixel is lighter than the densities of four pixels which are neighboring to the target pixel on the left and right sides. In this case, the directivity reliability may be set as a difference between the density of the pixel and that of the pixel having the second lightest density, for example.

Then, the microprocessor 15 functioning as the reliability extracting device 9 judges whether or not the value of the directivity reliability C(i) is the positive number (step a11). When judged that it is a positive number, i.e., only when it is highly possible that the ridge directivity of the pixel (x, y) is consistent with the direction code r(i), the microprocessor 15 temporarily stores the value of the directivity reliability C(i) that is the result, of the arithmetic processing to the table Cr(x, y) of the pixel (x, y) by corresponding to the direction code r(i) (step a12, see FIG. 13).

Therefore, provided that the current values of the indexes x, y, and the index i are 0, the value of the directivity reliability C(0) which corresponds to the probability of the pixel (0, 0) being along the direction code r (0) (the direction of 0 $\Pi$rad. with respect to the horizontal line) is temporarily stored to the table Cr (0, 0) of the pixel (0 , 0) by corresponding to the direction code r(0).

Then, the microprocessor 15 functioning as the reliability extracting device 9 judges whether or not the current, value of the index i for specifying the direction code r has reached the index value that corresponds to the last selectable directivity, i.e., 15/16 $\Pi$rad (step a13).

When the current value of the index i has not reached 15, it means that there is also another direction code which is to be assumed as the direction of the ridge of the pixel (x, y). Thus, the microprocessor 15 functioning as the reliability extracting device 9 increments the value of index i by 1 (steep a14) and, thereafter, repeats the same processing operations as described above, while assuming that the direction of the ridge of the pixel (x, y) is consistent with the direction code r(i).

At last, at the point where the current value of the index i reaches 15, all of the directions set in advance (i.e., sixteen direction codes r(i) by a unit of 1/16 $\Pi$rad. from a direction code r(0) that corresponds to 0 $\Pi$rad. with respect to the horizontal line to a direction code r(15) that corresponds to 15/16 $\Pi$rad. with respect to the horizontal line in this exemplary embodiment) are selected, and the values of the directivity reliabilities C(i) corresponding to each of the direction codes r(i) (i = 0, 1. 2, ---, 15) are stored to the table Cr of the pixel (x, y) (see FIG. 13).

Further, when the result of judgment in step a13 is true and it is confirmed that all the calculation and storing processing of the directivity reliability C(i) for a single pixel (x, y) are completed, the microprocessor 15 functioning as the reliability extracting device 9 judges whether or not the current value of the index x used for extracting the pixel from the frame memory of the memory 7 has reached the pixel number X that corresponds to the width of the image in the lateral direction (step a15).

When the result of judgment in step a15 becomes false and it is found that the current value of the index x has not reached the pixel number X, the microprocessor 15 functioning as the reliability extracting device 9 increments the value of the index x by 1 (step a16) and, thereafter, repeats the same processing operations described above on the next pixel (x, y) based on the updated index x and the value of the index y that is remained in the current value.

At last, at the point where the current value of the index x reaches the pixel number X, generation of the tables Cr(x, y) for each or the pixels (x, y) (x = 0, 1, 2, --- X) of one row as well as calculation and storing processing of the directivity reliabilities C(i) corresponding to all the direction codes r(i) of the sixteen directions for each of the pixels (x, y) are completed.

Further, when the result of judgment in step a15 becomes true and it is confirmed that generation of the tables Cr(x, y) for each of the pixels (x, y) of one row as well as calculation and storing processing of the directivity reliabilities C(i) corresponding to all the direction codes r(i) of the sixteen directions for each of the pixels (x, y) are completed, the microprocessor 15 functioning as the reliability extracting device 9 judges whether or not the current, value of the index y used for extracting the pixel from the frame memory of the memory 7 has reached the pixel number Y that corresponds to the width of the image in the longitudinal direction (step a17).

When the result of judgment in step a17 becomes false and it is found that the current value of the index y has not reached the pixel number Y, the microprocessor 15 functioning as the reliability extracting device 9 increments the value of the index y by 1 and initializes the value of the index x to 0 (step a18, step a4) and, thereafter, repeats the same processing operations described above on the next pixel (x, y) based on the updated values of the indexes x and y.

At last, at the point where the current value of the index y reaches the pixel number Y, generation of the tables Cr(x, y) for each of the pixels (x, y) (x = 0, 1, 2, --- X, y = 0, 1, 2, ---, Y) as well as calculation and storing processing of the directivity reliabilities C (i) corresponding to all the direction codes r(i) of the sixteen directions for each of the pixels (x, y) are completed.

Further, when the result, of judgment in step a17 is true and it is confirmed that generation of the tables Cr(x, y) for each of all the pixels (x, y) as well as calculation and storing processing of the directivity reliabilities C(i) corresponding to each of the direction codes r(i) of the sixteen directions for each of the pixels (x, y) are completed, the microprocessor 15 functioning as the data processing control device 14 again initializes the values of both of the indexes y, x for extracting the pixel from the frame memory of the memory 7 to 0 (step a19 and step a20 of FIG. 15).

FIG. 7B and FIG. 7C are conceptual diagrams which show, among the corresponding relations between the direction, codes r(i) of each pixel (x, y) and the directivity reliabilities C(i) obtained at the point where the processing of the above-described reliability extracting device 9 is completed and the result of judgment in step a17 becomes true, an image regarding the directivity reliabilities of the ridges of each pixel (x, y) by replacing the extent of the values of the directivity reliabilities C(6) of each pixel (x, y) corresponding to the direction, code r (6) (i.e., 3/8 Πrad.) and the values of the directivity reliabilities C(3) of each pixel (x, y) corresponding to the direction code r(3) (i.e., 3/16 Πrad.) with the densities of the image, while restricting the range to a part of the fingerprint of FIG. 4 (more specifically, restricting the range to the area α of FIG. 6A, i.e., the part that is shown by being enlarged in FIG. 7A).

FIG. 7B shows the relation between the extent of the value of the directivity reliability C(6) corresponding to the direction code r(6), in which the densities of the image are expressed in such a manner that the image becomes darker as the value of the directivity reliability C(6) becomes larger. In the same manner, FIG. 7C shows the relation between the extent of the value of the directivity reliability C(3) corresponding to the direction code r(3), in which the densities of the image are expressed in such a manner that the image becomes darker as the value or the directivity reliability C(3) becomes larger.

When a ridge direction is extracted from the area α of FIG. 6A, i.e., the part corresponding to FIG. 7A, by employing a known technique, it can be seen from FIG. 6B that a correct ridge direction that is the direction code r(6) (i.e., 3/8 Πrad.) cannot be extracted and a wrong direction code r (3) (i.e., 3/16 Πrad.) is extracted because of an influence of lines of ink blur that extends upwardly to the right side with a substantially constant interval in the vertical direction (more specifically, an influence of ink blur in 3/16 Πrad.).

In the meantime, when the processing performed by the reliability extracting device 9 of this exemplary embodiment is employed, it can be seen from FIG. 7B that there are observed many groups of pixels (x, y) having large values of the directivity reliabilities C(6) for the direction code r(6) that is the right ridge direction (i.e., along 3/8 Π rad.).

Further, as shown in FIG. 7C, when the processing performed by the reliability extracting device 9 of this exemplary embodiment is employed, the group of the pixels (x, y) having the directivity reliability C(3) of the direction code r(3) of the ink blur (i.e., direction along 3/16 Π rad.) appears. However, the density (i.e., the value of the directivity reliability C (3)) is relatively small. Moreover, it can be seen that the group of pixels (x, y) does not continue along the direction code r(3) of the ink blur (i.e., along 3/16 Πrad.).

That is, at the point where generation of the tables Cr (x, y) for each of all the pixels (x, y) as well as calculation and storing processing of the directivity reliabilities C(i) corresponding to all the direction codes r(i) of the sixteen directions for each of the pixels (x, y) are completed, it is possible to obtain the direction code r(i) whose directivity reliability C(i) becomes the maximum from the tables Cr (x, y) of each pixel (x, y) and to extract the appropriate ridge direction with specific accuracy even if the direction code r(i) is immediately extracted as the ridge direction of the target pixel (x, y). Moreover, it is possible to find out whether or not the ridge is extended along the direction code r(i) more accurately by evaluating whether or not the pixels (x, y) having the same direction code r(i) which corresponds to the maximum directivity reliability C(i) continue.

First, the microprocessor 15 functioning as the continuity evaluating device 10 searches the memory 7 with the current values of the indexes x, y used for reading out the evaluation-target table Cr(x, y) to judge whether or not there is a table Cr(x, y) corresponding to the current values of the indexes x, y generated in the memory 7 (step a21 of FIG. 15). When it is judged that there is the corresponding able Cr(x, y) generated therein, the microprocessor 15 reads out the table Cr(x, y) of the pixel (x, y) corresponding to the current values of the indexes x, y from the memory 7 as the evaluation target (step a22, see FIG. 13).

Then, the microprocessor 15 functioning as the continuity evaluating device 10 initializes the value of the index i for specifying the direction code r(i) that is the continuity evaluation target to 0 (step a23), and judges whether or not the directivity reliability C (i) corresponding to the direction code r(i) that is specified by the index i is stored in the table Cr(x, y) (step a24).

When the directivity reliability C(i) corresponding to the direction code r(i) is stored in the table Cr(x, y), the microprocessor 15 functioning as the continuity evaluating device 10 reads out, from the memory 7, tables Cr of some pixels (e.g., four tables corresponding to the four pixels, i.e., two pixels each on the positive and negative directions located by sandwiching the pixel (x, y) determined by the current values of the indexes x, y in the direction of the direction code r(i) that is specified by the index i), extracts the values of the directivity reliabilities C(i) corresponding to the direction code r(i) specified by the index i from each of the four tables Cr, and obtains the mean value of those values (step a25).

Therefore, provided that the current values of the indexes x, y and the index i are all 0, the four tables Cr corresponding to each of the pixels, (i.e., two pixels neighboring the pixel (0, 0) in the positive direction of the direction code r (0) (positive direction of 0 πrad. with respect to the horizontal line) by sandwiching the pixel (0, 0) that is the pixel at the origin and two neighboring pixels in the negative direction of the direction code r(0) (negative direction of 0 Πrad. with respect to the horizontal line) are read out from the memory 7. The directivity reliabilities C(0) corresponding to the direction code r(0) specified by the index i are extracted from each of those four tables Cr, and an added value of a total of five directivity reliabilities C(0) including the one stored in the table Cr(x, y) itself is obtained. Further, the added value is divided by "5" that is the total number of the directivity reliabilities C(0) to obtain the mean value.

Then, the microprocessor 15 performs skeletonization processing on those pixels (step a26), obtains the number of pixels connected along the direction of the direction code r(i), and temporarily stores the obtained value to a register of the memory 7 as continuous pixel number L (step a27). This skeletonization processing is performed when there are three or more pixels in the direction orthogonal to the direction of the direction code r (i), and it can be achieved by repeating processing for eliminating one pixel on both ends or one pixel on one of the sides.

Thereafter, the microprocessor 15 functioning as the continuity evaluating device 10 judges whether or not the value of the continuous pixel number L is equal to or less than a threshold value (for example, "8") (step a28). When it is judged as being equal to or less than the threshold value, the microprocessor 15 considers that the probability of the pixel (x, y) to be a part of the ridge along the direction of the direction code r(i) is low, and cancels the value of the directivity reliability C(i) from the table Cr(x, y) and disregards it (step a29). This processing is effective for easing a bad influence of noises (sweat pores and wrinkles, for example) which are not ridges.

In the meantime, when the result of judgment in step a28 turns out as false and it is found that the value of the continuous pixel number L is over the threshold value, the microprocessor 15 functioning as the continuity evaluating device 10 operates to: execute arithmetic processing of following Expression 2 to obtain the continuity reliability (L/100) based on the value of the continuous pixel number L; add a weight proportional to the continuity reliability by multiplying the continuity reliability (L/100) with the directivity reliability C(i) that is stored in the table Cr(x, y) by corresponding to the direction code r (i) to obtain updated directivity reliability C2(i)(step a30); and temporarily store the value to the table Cr(x, y) by corresponding to the direction code r(i) (step a31, see FIG. 13).

$$C2(i) = C(i) \times L/100 \quad \text{--- Expression 2}$$

C2 (i) : updated directivity reliability
L: continuous pixel number
L/100: continuity reliability

When the value of the continuous pixel number L exceeds a preset maximum value (about one hundred pixels, for example), the value of the continuous pixel number L may be limited to the maximum value (about 100, for example) in the processing of step a27.

Then, the microprocessor 15 functioning as the continuity evaluating device 10 judges whether or not the current value of the index i for specifying the direction code r has reached the index value 15 which corresponds to the last selectable directivity, i.e., 15/16 Πrad. (step a32).

When the current value of the index i has not reached 15, it means that there is also another direction code which is to be assumed as the direction of the ridge of the pixel (x, y). Thus, the microprocessor 15 functioning as the continuity evaluating device 10 increments the value of index i by 1 (step a33) and, thereafter, repeats the same processing operations as described above, while assuming that the direction of the ridge of the pixel (x, y) is consistent with the direction code r(i).

At last, at the point where the current value of the index i reaches 15, all the directions set in advance (i.e., sixteen direction codes r(i) by a unit of 1/16 Πrad. from a direction code r(0) that corresponds to 0 Πrad. with respect to the horizontal line to a direction code r(15) that corresponds to 15/16 Πrad. with respect to the horizontal line in this exemplary embodiment) are selected. Then, a weight according to the continuity reliability of that direction is applied to the values of the directivity reliabilities C(i) corresponding to each of the direction codes r(i) (i. = 0, 1. 2, ---, 15) to obtain the updated directivity reliabilities C2(i) by considering the continuity reliability, and those are stored to the table Cr of the pixel (x, y) (see FIG. 13).

Further, when the result of judgment in step a32 is true and it is confirmed that all the calculation and storing processing of the directivity reliability C2(i) for a single pixel (x, y) are completed, the microprocessor 15 functioning as the continuity evaluating device 10 judges whether or not the current value of the index x used for extracting the pixel from the frame memory of the memory 7 has reached the pixel number X that corresponds to the width of the image in the lateral direction (step a34).

When the result of judgment in step a34 becomes false and it is found that the current value of the index x has not reached the pixel number X, the microprocessor 15 functioning as the continuity evaluating device 10 increments the value of the index x by 1 (step a35) and, thereafter, repeats the same processing operations described, above on the next pixel (x, y) based on the updated index x and the value of the index y that is remained in the current value.

At last, at the point where the current value of the index x reaches the pixel number X, generation of the tables Cr (x, y) for each of the pixels (x, y) (x = 0, 1, 2, ---- X) of one row as well as calculation and storing processing of the directivity reliabilities C2(i) corresponding to all the direction codes r(i) of the sixteen directions for each of the pixels (x, y) are completed.

Further, when the result of judgment in step a34 is true and it is confirmed that generation of the tables Cr (x, y) for each of the pixels (x, y) of one row as well as calculation and storing processing of the directivity reliabilities C2(i) corresponding to all the direction codes r(i) of the sixteen directions for each of the pixels (x, y) are completed, the microprocessor 15 functioning as the continuity evaluating device 10 judges whether or not the current value of the index y used for extracting the pixel from the frame memory of the memory 7 has reached the pixel number Y that corresponds to the width of the image in the longitudinal direction (step a36).

When the result of judgment in step a36 becomes false and it is found that the current value of the index y has not reached the pixel number Y, the microprocessor 15 functioning as the continuity evaluating device 10 increments the value of the index y by 1 and initializes the value of the index x to 0 (step a37, step a20) and, thereafter, repeats the same processing operations described above on the next pixel (x, y) based on the updated values of the indexes x and y.

At last, at the point where the current value of the index y reaches the pixel number Y, calculation and storing processing of the directivity reliabilities C2(i) corresponding to the direction codes r(i) of the sixteen directions for all the tables Cr(x, y) corresponding to each of the pixels (x, y) (x = 0, 1, 2, --- X, y = 0, 1, 2, ---, Y) are completed.

Further, when the result of judgment in step a36 is true and it is confirmed that calculation and storing processing of the directivity reliabilities C2(i) corresponding to the direction codes r(i) of the sixteen directions for all the tables Cr (x, y) corresponding to each of the pixels (x, y) are completed, the microprocessor 15 functioning as the data processing control device 14 again initializes the values of both of the indexes y, x which are used for extracting the pixel from the frame memory of the memory 7 to 0 (step a38 and step a39 of FIG. 16).

FIG. 8B and FIG. 8C are conceptual diagrams which show, among the corresponding relations between the direction codes r(i) of each pixel (x, y) and the directivity reliabilities C2(i) updated by the continuity evaluating device 10 at the point where the processing of the above-described continuity evaluating device 10 is completed and the result of judgment in step a36 becomes true, an image regarding the directivity reliabilities of the ridges of each pixel (x, y) by replacing the extent of the values of the directivity reliabilities C (6) of each pixel (x, y) corresponding to the direction code r(6) (i.e., 3/8 Πrad.) and the values of the directivity reliabilities C(3) of each pixel (x, y) corresponding to the direction code r(3) (i.e., 3/16 Πrad.) with the densities of the image, while restricting the range to the area α of FIG. 6A, i.e., the part that is shown, by being enlarged in FIG. 8A).

As can be found by making comparison with FIG. 7B and FIG. 7C obtained by the processing of the reliability extracting device 9, components with the smaller continuous pixel number in each of the direction of the direction codes r(6) and r(3) are eliminated in the images of FIG. 8B and FIG. 8C expressing the directivity reliabilities C2(6) and C2(3) which are updated by the continuity evaluating device 10. Further, can be seen that the reliability of the pixels with a large continuous number becomes high.

Furthermore, it can be seen that there are more pixels with the high reliability existing in the right ridge direction shown in FIG. 8B, i.e., in the direction along the direction code r(6). Inversely, it can be seen that there are less pixels with the high reliability existing in the direction of ink blur shown in FIG. 8C, i.e., in the direction along the direction code r(3).

Therefore, at the point where as calculation and storing processing of the directivity reliabilities C2(i) corresponding to all the direction codes r(i) of the sixteen directions are completed for all the tables Cr(x, y) of each of the pixels (x, y), it is possible to obtain the direction code r(i) whose directivity reliability C2(i) becomes the maximum from the tables Cr(x, y) of each pixel (x, y) and extract the direction code r(i) as the ridge direction of the pixel (x, y) . In this case, it is possible to find out whether or not the ridge is extended along the direction code r(i) more accurately than the cases (see FIG. 7B, FIG. 7C) which extract the ridge directions of the pixels (x, y) by utilizing the directivity reliabilities C(i) obtained by the processing of the reliability extracting device 9.

That is, if the assumption that the ridge of the fingerprint is along a certain direction, e.g., the direction code r(i), is correct, pixels with high reliability ought to continue along the direction of the direction code r(i). From another viewpoint, when pixels with high reliability continue along the direction of a specific direction code r(i), it can be said that it is highly possible for the direction to be the right ridge direction. Therefore, the accuracy for detecting the ridge direction can be improved by using the directivity reliability C2(i) which takes the continuity into consideration.

Furthermore, ridges of a fingerprint are lined almost at equivalent, pitches and there is a periodicity found therein. Normally, there are other ridges on the left and right sides of a given ridge at almost equivalent intervals, and there are other valleys on the left and right sides of a given valley at almost equivalent intervals. Thus, if there are other highly reliable pixels existing in the direction orthogonal to the direction code r(i) of the ridge of the evaluation-target pixel, it can be said that the pixel (the evaluation-target pixel) is highly possible to be the pixel that forms the valley.

Similarly, the pixels in the vicinity thereof having the same directivity as that of the evaluation-target pixel are highly possible to be structural elements of other valleys.

First, the microprocessor 15 functioning as the periodicity evaluating device 11 searches the memory 7 with the current values of the indexes x, y for reading out the evaluation-target table Cr (x, y) to judge whether or not there is a table Cr(x, y) corresponding to the current values of the indexes x, y generated in the memory 7 (step a40 of FIG. 16). When it is judged that there is the corresponding able Cr(x, y) generated therein, the microprocessor 15 reads out the table Cr(x, y) of the pixel (x, y) corresponding to the current values of the indexes x, y from the memory 7 as the evaluation target (step a41, see FIG. 13).

Then, the microprocessor 15 functioning as the periodicity evaluating device 11 initializes the value of the index i for specifying the direction code r(i) that is the periodicity evaluation target to 0 (step a42), and judges whether or not the directivity reliability C2(i) corresponding to the direction code r(i) that is specified by the index i is stored in the table Cr(x, y) (step a43).

When the directivity reliability C2 (i) corresponding to the direction code r(i) is stored in the table Cr(x, y), the microprocessor 15 functioning as the periodicity evaluating device 11 reads out, from the memory 7, tables Cr of some pixels located by sandwiching the pixel (x, y) determined by the current values of the indexes x, y in the direction of the direction code r(i) specified by the index i, extracts the values of the directivity reliabilities C2(i) corresponding to the direction code r(i) specified by the index i from each of the tables Cr (step a44), and then obtains the probability of having other ridges close to the pixel (x, y) as the periodicity reliability df by using Expression 3 to be described later, for example, based on the values of the directivity reliabilities C2(i) (step a45).

Therefore, provided that the current values of the indexes x, y and the index i are all 0, the tables Cr corresponding to each of the pixels existing the direction code r(0) by sandwiching the pixel (0, 0), i.e., corresponding to the pixels existing in the direction code r(8) that is orthogonal to the direction of 0 Πrad. with respect to the horizontal line (positive and negative directions of 1/2 Πrad.) are read out from the memory 7. The values of the directivity reliabilities C2(0) corresponding to the direction code r(0) specified by the index i are extracted from each of those tables Cr, and the periodicity reliabilities dF corresponding to the direction code r(0) of the pixel (x, y) are obtained based on the values of the directivity reliabilities C2(0).

The typical interval of the ridges corresponds to six to fourteen pixels. Taking this into consideration, this exemplary embodiment performs the processing targeted on the sixth to fourteenth pixels on the left side and sixth to fourteenth pixels on the right side in the direction orthogonal to the direction code r(i) that is specified by the index i by sandwiching the pixel (x, y) that is determined by the current values of the indexes x, y. In the processing of step a44 described above, the directivity reliabilities C2(i) corresponding to the direction code r (i) specified by the index i are extracted from each of the tables corresponding to those pixels.

Now, the arithmetic processing of the periodicity reliability dF executed in step a45 will be described. It is so defined herein that the n-th neighboring pixel located by sandwiching the pixel (x, y) on the left side (negative direction) of the direction that is orthogonal to the direction code r(i) specified by the index i is nL, and the n-th neighboring pixel located by sandwiching the pixel (x, y) on the right side (positive direction) of the direction that is orthogonal to the direction code r(i) specified by the index i is nR. Further, the directivity reliabilities C2(i) of such pixels are referred to as the left-side neighbor reliability and the right-side neighbor reliability, respectively.

That is, the periodicity reliability dF when the direction code r(i) is assumed as the ridge direction of the pixel (x, y) can be obtained by following Expression 3, under the following conditions.

$$dF = \max(\min(dL(nL), dR(nR))) \quad \text{--- Expression 3}$$

$$6 \leq nL \leq 14$$

$$6 \leq nR \leq 14$$

$$|nL - nR| \leq 2$$

dL(nL): left-side neighbor reliability (directivity reliability C2(i) of the pixel located at on the left side of the pixel (x, y) in the direction orthogonal to the direction code r(i)

dR(nR): right-side neighbor reliability (directivity reliability C2(i) of the pixel located at nR-th on the right side of the pixel (x, y) in the direction orthogonal to the direction code r(i)

Note here that dF is the maximum value of the left-side neighbor reliability or the right-side neighbor reliability which takes the smaller value among combinations of any nL and nR which satisfy the above conditions.

In this case, the periodicity reliability dF is calculated by utilizing the values of the directivity reliabilities C2(i) However, it is also possible to calculate the periodicity reliability dF by utilizing the values of the directivity reliabilities C (i) instead of utilizing the values of the directivity reliabilities C2(i).

Then, the microprocessor 15 functioning as the periodicity evaluating device 11 judges whether or not the periodicity reliability dF(i) corresponding to the direction code r(i) that is specified by the index i has already been stored in the table Cr(x, y) of the pixel (x, y) (step a46). When it is judged that the periodicity reliability dF(i) is stored, the values of the stored periodicity reliability dF(i) and the periodicity reliability dF obtained anew in the processing of step a45 of this time are compared (step a47)

Then, when the value of the periodicity reliability dF obtained in the processing of this time exceeds the value of the stored periodicity reliability dF(i), the microprocessor 15 functioning as the periodicity evaluating device 11 replaces the value of the periodicity reliability dE(i) with the value of the newly obtained periodicity reliability dF and stores it to the table Cr(x, y) (step a48). When the value of the periodicity reliability dF obtained in the processing of this time does not exceed the value of the stored periodicity reliability dF(i), the microprocessor 15 keeps the value of the periodicity reliability dF (i) that is stored at that point.

Further, when the result of judgment in step a46 turns out as false and it is found that the periodicity reliability dF(i) corresponding to the direction code r(i) that is specified by the index i is not stored in the table Cr(x, y) of the pixel (x, y) at this point, the microprocessor 15 functioning as the periodicity evaluating device 11 temporarily stores the value of the periodicity reliability dF obtained in the processing of step a45 of this time as the value of the periodicity reliability dF(i) which corresponds to the direction code r(i) specified by the index i to the table Cr(x, y) of the pixel (x, y) unconditionally (step a48).

Thereafter, the microprocessor 15 functioning as the periodicity evaluating device 11 operates to: read all the tables Cr corresponding to the pixels located between the above-described pixels nL and nR; extract the values of the periodicity reliabilities dF(i) stored in each table Cr by corresponding to the direction code r(i); and, as in the processing of step a46 step a48 described above, compare the values of the periodicity reliabilities dF(i) which have already been stored in each table Cr and the periodicity reliability dF obtained anew in the processing of step a45 of this time. When the value of the periodicity reliability dF obtained in the processing of this time exceeds the value of the stored periodicity reliability dF(i), the microprocessor 15 replaces the value of the periodicity reliability dF(i) of this table Cr with the value of the newly obtained periodicity reliability dF. In the meantime, when the value of the periodicity reliability dF obtained in the processing of this time does not exceed the value of the stored periodicity reliability dF(i), the microprocessor 15 keeps the value of the periodicity reliability dF(i) that is stored in the table Cr by corresponding to the direction code d (i) at that point. Further, when the value of the periodicity reliability dF(i) is not stored in this table Cr, the microprocessor 15 temporarily stores the value of the periodicity reliability dF obtained in the processing of step a45 of this time as the value of the periodicity reliability dF(i) which corresponds to the direction code r(i) specified by the index i to that table Cr unconditionally (step a49).

As has been described, such processing (step a47 - step a49) is executed since it is highly possible for the pixels in the vicinity of the pixel (x, y) having the same directivity (direction code r(i)) as that of the pixel (x, y), i.e., the pixels located between the pixel nL and the pixel nR, to have the same ridge direction as that of the evaluation-target pixel (x, y).

Then, the microprocessor 15 functioning as the periodicity evaluating device 11 judges whether or not the current value of the index i for specifying the direction code r has reached the index value that corresponds to the last selectable directivity, i.e., 15/16 Πrad (step a50)

When the current value of the index i has not reached 15, it means that there is also another direction code whose periodicity reliability dF(i) needs to be obtained while assuming the direction of the ridge of the pixel (x, y). Thus, the microprocessor 15 functioning as the periodicity evaluating device 11 increments the value of index i by 1 (step a51) and, thereafter, repeats the same processing operations as described above, while assuming that the direction of the ridge of the pixel (x, y) is consistent with the direction code r(i).

At last, at the point where the current, value of the index i reaches 15, all of the sixteen direction codes r(i) by a unit of 1/16 Πrad. (from a direction code r(0) that corresponds to 0 Πrad. with respect to the horizontal line to a direction code r(15) that corresponds to 15/16 Πrad. with respect to the horizontal line in this exemplary embodiment) are selected, the periodicity reliabilities dF(i) corresponding to each of the direction codes are obtained, and the values are stored to the table Cr (x, y) of the pixel (x, y) (see FIG. 13).

Further, when the result of judgment in step a50 is true and it is confirmed that all the calculation and storing processing of the periodicity reliability dF(i) for a single pixel (x, y) are completed, the microprocessor 15 functioning as the periodicity evaluating device 11 judges whether or not the current value of the index x used for extracting the pixel from the frame memory of the memory 7 has reached the pixel number X that corresponds to the width of the image in the lateral direction (step a52).

When the result of judgment in step a52 becomes false and it is found that the current value of the index x has not reached the pixel number X, the microprocessor 15 functioning as the periodicity evaluating device 11 increments the value of the index x by 1 (step a53) and, thereafter, repeats the same processing operations described above on a next pixel (x, y) based on the updated index x and the value of the index y that is remained in the current value.

At last, at the point where the current value of the index x reaches the pixel number X, calculation and storing processing of the periodicity reliabilities dF(i) corresponding to all the direction codes r(i) of the sixteen directions are completed for each of the pixels (x, y) (x = 0, 1, 2, --- X) of one row.

Further, when the result of judgment in step a52 is true and it is confirmed that the calculation and storing processing of the periodicity reliabilities dF(i) corresponding to all the direction codes r(i) of the sixteen directions for each of the pixels (x, y) of one row are completed, the microprocessor 15 functioning as the periodicity evaluating device 11 judges whether or not the current value of the index y for extracting the pixel from the frame memory of the memory 7 has reached the pixel number Y that corresponds to the width of the image in the longitudinal direction (step a54).

When the result of judgment in step a.54 becomes false and it is found that the current value of the index y has not reached the pixel number Y, the microprocessor 15 functioning as the periodicity evaluating device 11 increments the value of the index y by 1 and initializes the value of the index x to 0 (step a55, step a39) and, thereafter, repeats the same processing operations described above on the pixels (x, y) of a next row based on the updated values of the indexes x and y.

At last, at the point where the current value of the index y reaches the pixel number Y, calculation and storing processing of the periodicity reliabilities dF(i) corresponding to the direction codes r(i) of the sixteen directions for all the tables Cr(x, y) corresponding to each of the pixels (x, y) (x = 0, 1, 2, --- X, y = 0, 1, 2, ---, Y) are completed.

Further, when the result of judgment in step a54 is true and it is confirmed that the calculation and storing processing of the periodicity reliabilities dF(i) corresponding to the direction codes r(i) of the sixteen directions for all the tables Cr(x, y) corresponding to each of the pixels (x, y) are completed, the microprocessor 15 functioning as the data processing control device 14 again initializes the values of both of the indexes y, x for reading out the tables Cr(x, y) from the memory 7 to 0(step a56 and step a57 of FIG. 17).

FIG. 9B and FIG. 9C are conceptual diagrams which show, among the corresponding relations between the direction codes r(i) of each pixel (x, y) and the periodicity reliabilities dF(i) obtained by the periodicity evaluating device 11 at the point where the processing of the above-described periodicity evaluating device 11 is completed and the result of judgment instep a54 becomes true, an image regarding the directivity reliabilities of the ridges of each pixel (x, y) by replacing the extent of the values of the periodicity reliabilities dF (6) of each pixel (x, y) corresponding to the direction code r (6) (i.e., 3/8 Πrad.) and the values of the periodicity reliabilities dF(3) of each pixel (x, y) corresponding to the direction code r(3) (i.e., 3/16 Πrad.) with the densities of the image, while restricting the range to the area α or FIG. 6A, i.e., the part that is shown by being enlarged in FIG. 9A).

It can be seen that there are more pixels with the high reliability existing in the right ridge direction shown in FIG. 9B, i.e., in the direction along the direction code r(6). Inversely, it can be seen that there are less pixels with the high reliability existing in the direction of ink blur shown in FIG. 9C, i.e., in the direction along the direction code r(3).

First, the microprocessor 15 functioning as the periodicity evaluating device 11 searches the memory 7 with the current values of the indexes x, y used for reading out the evaluation-target table Cr(x, y) to judge whether or not there is a <u>table</u> Cr(x, y) corresponding to the current values of the indexes x, y generated in the memory 7 (step a58 of FIG. 17). When it is judged that there is the corresponding able Cr(x, y) generated therein, the microprocessor 15 reads out the table Cr(x, y) of the pixel (x, y) corresponding to the current values of the indexes x, y from the memory 7 as the evaluation target (step a59, see FIG. 13).

Then, the microprocessor 15 functioning as the periodicity evaluating device 11 initializes the value of the index i for specifying the direction code r(i) that is the calculation target of the final reliability which considers both the continuity and the periodicity to 0 (step a60), and judges whether or not the periodicity reliability dF(i) corresponding to the direction code r(i) that is specified by the index i is stored in the table Cr(x, y) (step a61).

When the periodicity reliability dF (i) corresponding to the direction code r(i) that is specified by the index i is stored in the table Cr(x,y), the microprocessor 15 functioning as the periodicity evaluating device 11 operates to: read out, from the memory 7, the value of the directivity reliability C2(i) corresponding to the direction code r(i) specified by the index i; multiplies the value of the periodicity reliability dF(i) with the read value for applying a weight proportional to the periodicity reliability dF(i) so as to obtain the final reliability eF(i) by considering both the continuity and the periodicity; and update and store the value in the table C(x, y) or store it additionally (step a62).

Therefore, provided that the current values of the indexes x, y and the index i are all 0, the value of the final reliability eF(0) which corresponds to the probability of the pixel (0, 0), being located along the direction code r(0) that is the direction of 0 Πrad. with respect to the horizontal line is temporarily stored to the table Cr(0, 0) of the pixel (0, 0) by corresponding to the direction code r(0).

Then, the microprocessor 15 functioning as the periodicity evaluating device 11 judges whether or not the current value of the index i for specifying the direction code r has reached the index value that corresponds to the last selectable directivity, i.e., 15/16 trad (step a63).

When the current value of the index i has not reached 15, it means that there is also another direction code whose final reliability eF(i) needs to be obtained while assuming the direction of the ridge of the pixel (x, y). Thus, the microprocessor 15 functioning as the periodicity evaluating device 11 increments the value of index i by 1 (step a64) and, thereafter, repeats the same processing operations as described above to obtain the final reliability eF(i), while assuming that the direction of the ridge of the pixel (x, y) is consistent with the updated direction code r(i).

At last, at the point where the current value of the index i reaches 15, all of sixteen direction codes r(i) by a unit of 1/16 Πrad. (from a direction code r(0) that corresponds to 0 Π rad. with respect to the horizontal line to a direction code r(15) that corresponds to 15/16 Πrad. with respect to the horizontal line in this exemplary embodiment) are selected, the final reliabilities eF(i) corresponding to each of the direction codes are obtained, and the values are stored to the table Cr (x, y) of the pixel (x, y) (see FIG. 13).

Further, when the result of judgment in step a63 is true and it is confirmed that all the calculation and storing processing of the final reliability eF(i) for a single pixel (x, y) are completed, the microprocessor 15 functioning as the periodicity evaluating device 11 judges whether or not the current value of the index x used or extracting the pixel from the frame memory of the memory 7 has reached the pixel number X that corresponds to the width of the image in the lateral direction (step a65).

When the result of judgment in step a65 becomes false and it is found that the current value of the index x has not reached the pixel number X, the microprocessor 15 functioning as the periodicity evaluating device 11 increments the value of the index x by 1 (step a66) and, thereafter, repeats the same processing operations described above on a next pixel (x, y) based on the updated index x and the value of the index y that is remained in the current value.

At last, at the point where the current value of the index x reaches the pixel number X, calculation and storing processing of the final reliabilities eF(i) corresponding to the direction codes r(i) of the sixteen directions for each of the pixels (x, y) (x = 0, 1, 2, --- X) are completed.

Further, when the result of judgment in step a65 is true and it is confirmed that the calculation and storing processing of the final reliabilities eF(i) corresponding to the direction codes r(i) of the sixteen directions for all the tables Cr(x, y) corresponding to each of the pixels (x, y) of one row are completed, the microprocessor 15 functioning as the periodicity evaluating device 11 judges whether or not the current value of the index y for extracting the pixel from the frame memory of the memory 7 has reached the pixel number Y that corresponds to the width of the image in the longitudinal direction (step a67).

When the result of judgment in step a67 becomes false and it is found that the current value of the index y has not reached the pixel number Y, the microprocessor 15 functioning as the periodicity evaluating device 11 increments the value of the index y by 1 and initializes the value of the index x to 0 (step a68, step a57) and, thereafter, repeats the same processing operations described above on the tables Cr(x, y) of the pixels (x, y) of the next row basel on the updated values of the indexes x and y.

At last, at the point where the current value of the index y reaches the pixel number Y, calculation and storing processing of the final reliabilities eF(i) corresponding to the direction codes r(i) of the sixteen directions for all the tables Cr)x, y) corresponding to each of the pixels (x, y) (x = 0, 1, 2, - - - X, y = 0, 1, 2, - - -, Y) are completed.

Further, when the result of judgment in step a67 is true and it is confirmed that the calculation and storing processing of the final reliabilities eF(i) corresponding to the direction codes r(i) of the sixteen directions for all the tables Cr(x, y) corresponding to each of the pixels (x, y) are completed, the microprocessor 15 functioning as the data processing control device 14 again initializes the values of both of the indexes y, x for reading out the tables Cr(x, y) from the memory 7 to 0 (step a69 and step a70 of FIG. 18).

Then, the microprocessor 15 functioning as the ridge direction determining device 12 searches the memory 7 with the current values of the indexes x, y used for reading out the evaluation-target table Cr(x, y) to judge whether or not there is a table Cr(x, y) corresponding to the current values of the indexes x, y generated in the memory 7 (step a71 of FIG. 18). When it is judged that there is the corresponding able Cr(x, y) generated therein, the microprocessor 15 reads out the table Cr(x, y) of the pixel (x, y) corresponding to the current values of the indexes x, y from the memory 7 as the evaluation target (step a72, see FIG. 13).

Then, the microprocessor 15 functioning as the ridge direction determining device 12 initializes the value of the index i for specifying the direction code r(i) that is the periodicity evaluation target to 0 (step a73), and judges whether or not the final reliability eF(i) corresponding to the direction code r(i) that is specified by the index i is stored in the table Cr(x, y) (step a75).

When the final reliability eF(i) corresponding to the direction code r(i) is stored in the table Cr(x, y), the microprocessor 15 functioning as the ridge direction determining device 12 reads out, from the memory 7, the final reliabilities eF(i) corresponding to the direction code r(i), and compares the currently stored maximum value eF with the reliability eF(i) (step a76). Only when the value of the reliability eF(i) exceeds the currently stored maximum value eF, the microprocessor 15 updates the currently stored maximum value to the reliability eF(i) and stores it (step a77), while updating and storing the current value of the index i to a directivity storing register R1 of the memory 7 (step a78).

Therefore, provided that the current values of the indexes x, y and the index i are all 0, the value of the final reliability eF(0) which corresponds to the probability of the pixel (0, 0), being located along the direction code r(0) that is the direction of 0 Πrad. with respect to the horizontal line is compared with the current maximum stored reliability eF (initial value 0 in this case). When the value of the reliability eF(i) exceeds the currently stored maximum value eF, the currently stored maximum value is updated to the reliability eF(0) and stored in the maximum value storing register as the maximum value of the reliability at that point. At the same time, the direction code r(0) corresponding to the maximum value of the reliability is stored to the directivity storing register R1.

Then, the microprocessor 15 functioning as the ridge direction determining device 12 judges whether or not the current value of the index i for specifying the direction code r has reached the index value that corresponds to the last selectable directivity, i.e., 15/16 Πrad (step a79).

When the current value of the index i has not reached 15, it means that there is also another direction code whose final reliability eF(i) is possible to become the maximum value of the pixel (x, y). Thus, the microprocessor 15 functioning as the ridge direction determining device 12 increments the value of index i by 1 (step a80) and, thereafter, repeats the same processing operations as described above.

At last, at the point where the current value of the index i reaches 15, all the values of the reliabilities eF(i) corresponding to the sixteen direction codes r(i) by a unit of 1/16 Πrad. (from a direction code r(0) that corresponds to 0 Πrad. with respect to the horizontal line to a direction code r(15) that corresponds to 15/16 Πrad. with respect to the horizontal line in this exemplary embodiment) are compared. At the point where the result of judgment in step a79 becomes true, the direction code r stored in the directivity storing register R1 becomes the direction code corresponding to the maximum value of the reliability eF (i.e., the ridge direction of the pixel (x, y)) (step a81).

Then, the microprocessor 15 functioning as the ridge direction determining device 12 operates to: read, from the table Cr(x, y), the reliability eF corresponding to the ridge direction that is orthogonal to the direction code r(R1) whose reliability is the maximum (step a82); and obtains the difference (eF(R1) - eF (RV)) between the reliability eF(R1) of the direction code r(R1) having the maximum reliability and the reliability eF(RV) corresponding to the ridge direction RV that is orthogonal to the direction code r(R1) having the maximum reliability, and determine the obtained value as the direction reliability when it is assumed that the pixel (x, y) is located along the direction code r(R1) (step a83, see FIG 13).

As described above, this exemplary embodiment employs sixteen directions. Thus, RV can be calculated by a following expression.

$$RV = MOD(R1 + 8, 16)$$

Therefore, provided that the current values of the indexes x, y are both 0 and the value of the directivity storing register R1 is the direction code r(6), there is obtained a difference (ef(6) - ef(14))between the direction code r(6) in the table Cr(0, 0) corresponding to the pixel (0, 0) (i.e., the reliability eF(6) of the direction along the direction of 3/8 Πrad. with respect to the horizontal line) and the direction code r(14) that is orthogonal thereto (i.e., the reliability eF(14) of the direction along the direction of 7/8 Πrad. with respect to the horizontal line). The direction code r(6) is stored as the ridge direction corresponding to the pixel (0, 0), while the value of (ef(6) - ef(14)) is stored as the direction reliability of the pixel (0, 0) whose ridge direction is the direction code r(6).

Further, the microprocessor 15 functioning as the ridge direction determining device 12 judges whether or not the value of the reliability (eF(R1) ⋯ eF(RV)) exceeds a set value that is set in advance (step a84). When the value of the reliability (eF(R1) ⋯ eF(RV)) exceeds the set value that is set in advance, the microprocessor 15 considers that the result of judgment that the ridge direction of the pixel (x, y) is along the direction code r(R1) is appropriate, and registers the direction code r(R1) as the ridge direction of the pixel (x, y) while registering the value of the direction reliability (eF (R1) eF(RV)) as the reliability of the pixel (x, y) (step a85). When the value of the reliability (eF(R1) ⋯ eF(RV)) has not reached the set value that is set in advance, the microprocessor 15 considers that the result of judgment that the ridge direction of the pixel (x, y) is along the direction code r (R1) is not necessarily appropriate, and registers a code indicating that the ridge direction of the pixel (x, y) is unknown by corresponding to that pixel (step a85).

In this manner, the value of the ridge direction r(R1) and the reliability (eF(R1) - eF(RV)) for a single pixel (x, y) are obtained, and those values are registered by corresponding to the pixel (x, y). Thereafter, the microprocessor 15 functioning as the ridge direction determining device 12 judges whether or not the current value of the index x has reached the pixel number X that corresponds to the width of the image in the lateral direction (step a87).

When the result of judgment in step a87 becomes false and it is found that the current value of the index x has not reached the pixel number X, the microprocessor 15 functioning as the ridge direction determining device 12 increments the value of the index x by 1 (step a88) and, thereafter, repeats the same processing operations described above on the table Cr(x, y) of the next pixel (x, y) based on the updated index x and the value of the index y that is remained in the current value so as to obtain the ridge direction code r(R1) and the reliability (eF (R1) - eF (RV)) which correspond to the new pixel (x, y).

At last, at the point where the current value of the index x reaches the pixel number X, the processing for obtaining and registering the ridge directions r(R1) and the reliabilities thereof (eF(R1) ⋯ eF(RV)) corresponding to each of the pixels (x, y) (x = 0, 1, 2, ---, X of one row) is completed.

Further, when the result of judgment in step a87 is true and it is confirmed that the processing for obtaining and registering the ridge directions r(R1) and the reliabilities thereof (eF(R1) - eF(RV)) corresponding to each of the pixels of one row is completed, the microprocessor 15 functioning as the ridge direction determining device 12 judges whether or not the current value of the index y used for reading out the table Cr(x, y) as the evaluation target from the memory 7 has reached the pixel number Y that corresponds to the width of the image in the longitudinal direction (step a89).

When the result of judgment in step a89 becomes false and it is found that the current, value of the index y has not reached the pixel number Y, the microprocessor 15 functioning as the ridge direction determining device 12 increments the value of the index y by 1 and initializes the value of the index x to 0 (step a90, step a70) and, thereafter, repeats the same processing operations described above on the tables Cr(x, y) of the pixels (x, y) of the next row based on the updated values of the indexes x and y.

At last, at the point where the current value of the index y reaches the pixel number Y, all the values regarding the ridge directions r(R1) and the reliabilities thereof (eF(R1) ⋯ eF(RV)) corresponding to each of the pixels (x, y) (x = 0, 1, 2, ---, X, y = 0, 1, 2, ---, Y) are obtained, and the registering processing is completed.

Further, when the result of judgment in step a89 is true and it is confirmed that the processing for obtaining and registering the values regarding the ridge directions r(R1) and the reliabilities thereof (eF(R1) - eF(RV)) corresponding to all the pixels (x, y) is completed, the microprocessor 15 functioning as the data processing control device 14 again initializes the values of both of the indexes y, x used for reading out the tables Cr(x, y) from the memory 7 to 0 (step a91 and step a92 of FIG. 19).

FIG. 10A is a conceptual diagram showing an image of a corresponding relation between positions of each pixel (x, y) and ridge directions r(R1) of each pixel (x, y) obtained at the point where the processing of the ridge direction determining device 12 is completed and the result of judgment in step a89 becomes true. FIG. 10B is a conceptual diagram shewing an image of a corresponding relation between the positions of each pixel (x, y) and the values of the reliabilities (eF(R1) - eF(RV)) for each pixel (x, y). As the above-described cases, the displayed range is limited to the area α of FIG. 6A (i.e., the part that is shown by being enlarged in FIG. 9A).

In FIG. 10B, the part with a high reliability is shown with a dark color, and white pixels are the pixels for which a code indicating the unknown direction is stored. As described above, the value of the ridge direction r(R1) for the part whose reliability is less than the set value is not registered but a code indicating the unknown direction is registered instead (see step a84 and a86). In the part whose reliability is less than the set value, there is no direction indicating the ridge direction, as in the upper position and the lower position in substantially the center area of FIG. 10A.

FIG. 11 shows the result obtained at the point where the result of judgment in step a89 becomes true, i.e., the result obtained by outputting the extraction result of the ridge directions of the whole range (i.e., the range that is same as the range of FIG. 6A), while keeping the unknown ridge direction corresponding to the pixel that is determined as having the unknown direction by the ridge direction determining device 12.

As can be seen from a comparison of FIG. 11 and FIG. 6A, the accuracy regarding the extraction is higher in the case of FIG. 11 which is extracted by the processing operations of this exemplary embodiment than the case of FIG. 6A in which the ridge directions are extracted by employing the known techniques, at least for the area where the ridge directions are obtained clearly.

In this exemplary embodiment, the pixel whose directivity is considered uncertain is solely judged as having unknown directivity, by giving a priority to the accuracy regarding extraction of the ridge direction. However, by combining it with a known technique further, extraction of the ridge direction can be conducted over the whole range of the fingerprint as in FIG. 6A, even though there is a partial deterioration in the accuracy.

Therefore, in this exemplary embodiment, the microprocessor 15 functioning as the ridge direction synthesizing device 13 with a function of a known ridge direction extracting device built-in thereto operates to: read out the table Cr (x, y) corresponding to the current values of the indexes x, y from the memory 7 (step a93 of FIG. 19); judge whether or not a code indicating that the directivity corresponding to the pixel (x, y) is uncertain is stored in the table Cr(x, y) (step a94); and applies a label to the pixel (x, y) only when the code indicating the uncertain directivity is stored (step a95).

Thereafter, the microprocessor 15 functioning as the ridge direction synthesizing device 13 repeats the processing of successively reading out all the tables Cr(x, y) of each of all the pixels (x, y) (x = 0, 1, 2, --- X, y = 0, 1, 2, ---, Y), and applying the label to all the pixels (x, y) that have the code indicating the uncertain directivity stored in the table (loop processing of step a92 - step a99) .

At last, when the result of judgment in step a98 becomes true and it is confirmed that labeling is applied to all the pixels that have the code indicating the uncertain directivity stored in the table, the microprocessor 15 functioning as the ridge direction synthesizing device 13 operates to: read out all the densities of the labeled pixels (x, y) from the frame memory of the memory 7 configured with the RAM 17; obtain the directivities of the ridge directions of all the pixels (x, y) whose directivities are judged as unknown by the ridge direction determining device 12 by employing algorithms of known ridge direction extracting methods such as the techniques disclosed in Patent Document 1, Patent Document 2, or the like, for example; combine those with the result obtained by the ridge direction determining device 12 to obtain data in which the part with unknown directivity is complemented, and temporarily store the data to the memory 7; and give it to the ridge extracting device 4 (step a100) .

This makes it possible to extract the ridge directions in a still wider area. FIG. 12 shows the extraction image of the ridge directions outputted finally by the ridge direction synthesizing device 13.

As can be seen from a comparison of FIG. 6B and FIG. 12, regarding the part where the directivity is judged as uncertain by the ridge direction determining device 12, the accuracies of the extracted ridge directions are equivalent in the image of FIG. 12 and in the image of FIGS. 6A and 6B because of the ridge direction extraction processing executed according to the known techniques.

Here, as a way of example, described is the case of processing which: creates the tables Cr(x, y) for each of the pixels(x, y) configuring an image; temporarily stores the directivity reliability, the periodicity reliability, the final reliability, and the like to the respective tables by each of the direction codes r(i) (i = 0, 1, 2, ---, 15); and extracts the directivity for each pixel (x, y). However, the same processing operations can also be executed by creating tables (referred to as reliability planes) of each direction codes r(i), and temporarily storing each data (the directivity reliability, the periodicity reliability, the final reliability, and the like) corresponding to the direction codes r(i) of all the pixels (x, y) to the respective reliability planes.

That is, as shown in FIG. 13, for example, the combination of data that is to be processed in this exemplary embodiment includes: positional information of the pixels (x = 0, 1, 2, ---, X, y = 0, 1, 2, --- Y); the direction codes r(i) (i = 0, 1, 2, ---, 15) for assuming the ridge directivities; the directivity reliability C(i); the directivity reliability C2(i) which takes the continuity into consideration the periodicity reliability dF(i); and the final reliability eF(i). In short, this is six-dimensional array data having "(x, y), r(i), C(i), C2(i), dF(i), eF(i)" as one set. Therefore, the contents become completely the same even when the tables Cr(x, y) are created for each pixel (x, y) to have the five-dimensional array data of "r(i), C(i), C2(i), dF(i), eF(i)" stored therein, or even when the reliability planes are created for each direction codes r(i) to have the five-dimensional array data of "(x, y), C(i), C2(i), dF(i), eF(i)" stored therein. As described, it is only a matter of design to decide what kinds of table structures are to be employed.

As described above, this exemplary embodiment is structured to: sequentially select sixteen direction codes r(i) (i 0, 1, 2, ---, 15) by a unit of 1/16 Πrad. from a direction code r(0) that corresponds to 0 Πrad. with respect to the horizontal line to a direction code r(15) that corresponds to 15/16 Πrad. with respect to the horizontal line, and assume that each of the pixels (x, y) forming an image configures a part of valleys along the direction codes r (i); obtain by each direction code r(i) for each pixel (x, y) the directivity reliability C(i) that shows the probability of the pixel (x, y) being a part of the valley along the direction code r(i) based on the difference between the densities of some pixels neighboring to the target pixel (x, y) in the direction orthogonal to the assumed direction code r(i) and the density of the target pixel (x, y); and determine the direction code r(i) whose directivity reliability C(i) becomes the maximum as the ridge directivity of the pixel (x, y). Thus, it is possible to properly extract the narrow-width and continuous valley and the ridge directivities of the neighboring pixels thereof even if there is aperiodic noise. Especially, this exemplary embodiment is structured to extract the ridge directivity by a unit of pixel, so that it is possible to extract the ridge directivity precisely.

In practice, when the ridge direction of the pixel (x, y) is determined based only on the directivity reliability C(i), the tables Cr(x, y) for each pixel (x, y) as in FIG. 13 are referred at the point where the result of judgment in step a17 of FIG. 14 becomes true, the maximum value of the directivity reliabilities C(i) is extracted from each table Cr(i), and the direction code r(i) corresponding to the maximum value of the directivity reliability C(i) is determined as the ridge direction of the pixel (x, y).

The valley formed with a valley line is hardly affected by a bad influence of a noise such as ink blur. Therefore, even if the noise of ink blur has a periodicity similar to that of the fingerprint ridge, it is possible to extract the ridge direction accurately by utilizing such feature of the valley line as in the case of the exemplary embodiment.

Further, it is also possible with the exemplary embodiment to: obtain the continuity reliability (i) of the direction code r(i) regarding the pixel (x, y) based on the number of pixels continued from the pixel (x, y) in the direction that is consistent with the assumed direction code r(i); add a weight proportional to the continuity reliability (i.e., adds a weight in such a manner that the reliability becomes lager as the continuity of the pixel becomes greater) so as to obtain the directivity reliability C2(i) by taking the continuity into consideration; and determine the direction code r(i) whose directivity reliability C2(i) becomes the maximum as the directivity of the ridge direction of the pixel (x, y). Therefore, it is possible to improve the extraction accuracy by decreasing the probability of recognizing a wrong directivity as the ridge directivity.

In practice, when the ridge direction of the pixel (x, y) is determined based only on the directivity reliability C2(i), the tables Cr(x, y) for each pixel (x, y) as in FIG. 13 are referred at the point where the result of judgment in step a36 of FIG. 15 becomes true, the maximum value of the directivity reliability C2(i) is extracted from each table Cr (i), and the direction code r(i) corresponding to the maximum value of the directivity reliability C2(i) is determined as the ridge direction of the pixel (x, y).

Since the continuity of the pixel is one of the features of the fingerprint ridges, so that the extraction accuracy of the ridge directions can be improved by evaluating the continuity and updating the directivity reliability based thereupon.

However, in a case where the ridge direction is extracted based only upon the directivity reliability C2(i) or the directivity reliability C (i) which do not take the periodicity of the ridge into consideration, the periodicity reliability dF(i) is not registered. Thus, as shown in FIG. 8B and FIG. 8C, the directivity reliability of the pixel is defined only in the area of the valley line of a fingerprint. In that case, the reliability in the areas other than the valley line becomes unknown, so that it is difficult to determine the directivity.

Therefore, in such case, searched first is the closest pixel with the defined directivity reliability in the vicinity of the pixel (x, y) whose directivity reliability is undefined. If the distance therebetween is within the range of a typical ridge interval (about fourteen pixels, for example), there is executed expansion processing to register the directivity reliability of the closest pixel as the directivity reliability of that pixel (x, y). Specifically, this is the processing which creates a table Cr(x, y) corresponding to the pixel (x, y) that has no table Cr(x, y) being created, and copies the contents of the table Cr of the neighboring pixel (x, y) . As a result of this processing, the directivity reliabilities can be registered including those of the pixels in the area other than the valley line in the vicinity of the pixel whose directivity reliability has already been registered. Therefore, the directivity can be determined in the areas other than the valley line area. The processing thereafter is the same as that of the exemplary embodiment described above.

Moreover, this exemplary embodiment is structured to be able to: successively select the sixteen direction codes r(i) for each of the pixels (x, y) extracted from an image, and assume every time that the ridge directivity of the pixel (x, y) is consistent with the direction code r(i) that is selected at that point; obtain the probability of having another ridge close to the pixel (x, y) as the periodicity reliability dF(i) based on the values of the directivity reliability C2(i) or the directivity reliability C (i) in the directions codes r(i) of some pixels close to the pixel (x, y) in the direction orthogonal to the direction code r(i); add a weight proportional to the periodicity reliability dF(i), i.e., update the values of the directivity reliability C2(i) or the directivity reliability C(i) in such a manner that the reliability becomes greater as the periodicity becomes higher, so as to obtain the final reliability eF(i); and determine the direction code r(i) whose final reliability eF (i) becomes the maximum as the directivity of the ridge direction of the pixel (x, y). Therefore, it is possible to improve the extraction accuracy of the ridge directivity further. Since it is one of the features of the fingerprint ridges that there is a periodicity in the ridges, the extraction accuracy of the ridge directions can be improved by evaluating the periodicity of the ridges and obtaining the final reliability.

Particularly, when there is a pixel with high reliability existing within the interval of six to fourteen pixels, which is a typical ridge interval, it is judged that there is a periodicity between the pixels lined on the left and right sides. In that case, a new reliability determined according to the reliabilities of the three pixels including the target pixel (x, y) and the pixels on the left and right sides thereof is calculated, and the reliabilities are updated for all the pixels between the left and right pixels (see step a45 - step a49 of FIG. 16). Therefore, it is possible to apply a weight by placing a serious consideration on the periodicity.

Moreover, this exemplary embodiment includes the ridge direction synthesizing device 13 that has a function of a known ridge direction extracting device built-in thereto, which operates to: obtain the directivities of the ridge directions of all the pixels (x, y) whose directivities are judged as unknown by the ridge direction determining device 12, through employing the techniques disclosed in Patent Document 1, Patent Document 2, or the like, for example; and combine those with the result obtained by the ridge direction determining device 12 to complement the ridge direction, that is judged as unknown. Therefore, it is possible to extract the ridge directions in a still wider area.

In this exemplary embodiment, the final reliability eF(i) is obtained by calculating a direct product of the directivity reliability C2(i) that takes the continuity into consideration and the periodicity reliability dF (i) that takes the periodicity into consideration. However, it is also possible to determine the direction code r(i) whose reliability eF(i) becomes the maximum as the ridge directivity of the pixel (x, y) by evaluating the directivity reliability C2(i) and the periodicity reliability dF(i) as independent events and using the one with the smaller value (the directivity reliability C2(i) or the periodicity reliability dF(i)) corresponding to the respective direction code r(i) as the final reliability eF(i).

When employing such structure, the values of the directivity reliability C2 (i) and the periodicity reliability dF(i) are compared, and the smaller value is substituted to the final reliability eF(i), instead of executing the processing of step a62 shown in FIG. 17. However, the processing other than that is completely the same as the processing described earlier in the exemplary embodiment.

The ridge direction extracting device, the ridge direction extracting program, and the ridge direction extracting method according to the present invention are structured to: assume the ridge directivity along some direction codes set in advance; obtain the reliability indicating the probability of the assumed direction code being consistent with a valley for each direction code by a unit of pixel based on a difference between a density of a target pixel and densities of pixels neighboring to the target pixel in a direction orthogonal to the assumed direction code; and determine the direction having the maximum reliability as the ridge directivity of the target pixel. Therefore, as an exemplary advantage according to the invention, it is possible to extract the valley having a narrow width and a continuous valley line, and the ridge directivities of the neighboring pixels thereof. Especially, the present invention is structured to extract the ridge directivities by a unit of pixel, so that it is possible to extract the ridge directivities precisely.

An example 1 describes a ridge direction extracting device for extracting a ridge directivity from an inputted fingerprint image or an inputted palm print image by a unit of pixel, the device comprising
a reliability extracting device which: sequentially selects each direction from some directions set in advance for each pixel extracted from the image, and assumes that the ridge directivity of the extracted pixel is consistent with the selected direction; obtains by each of the directions a directivity reliability, which shows a probability of the ridge directivity of the extracted pixel being consistent with the selected direction based on a difference between a density of the extracted pixel and densities of pixels neighboring to the extracted pixel in a direction orthogonal to the selected direction, as a reliability for each of the directions set in advance; and temporarily stores a corresponding relation between the directions set in advance and the reliabilities to a table of a memory, and

a ridge direction determining device which searches a maximum value of the reliabilities from the table, and determines the direction corresponding to the maximum value of the reliabilities as the ridge directivity of the pixel.

An example 2 describes the ridge direction extracting device as described in the example 1, comprising a continuity evaluating device which: obtains a continuity reliability based on number of pixels continued from the extracted pixel having a same direction that is consistent with the selected direction; and adds a weight proportional to the continuity reliability by each of the selected directions to update a value of the reliability stored in the table by corresponding to the respective directions.

An example 3 describes the ridge direction extracting device as described in the example 1 or 2, comprising a periodicity evaluating device which: sequentially selects each direction from the directions set in advance for each pixel extracted from the image, and assumes that ridge directivity of the extracted pixel is consistent with the selected direction; obtains a probability of having another ridge close to the extracted pixel based on values of reliability of pixels neighboring to the extracted pixel in the direction orthogonal to the selected direction as a periodicity reliability; and adds a weight proportional to the periodicity reliability by each of the selected directions to update values of the reliability stored in the table by corresponding to the respective directions.

An example 4 describes a ridge direction extracting program for extracting a ridge directivity from an inputted fingerprint image or an inputted palm print image by a unit of pixel, the program allowing a microprocessor of a computer to execute

a function of: extracting a pixel one by one from the inputted image; sequentially selecting each direction from some directions set in advance for each pixel extracted from the image, and assuming that the ridge directivity of the extracted pixel is consistent with the selected direction; obtaining by each of the directions a directivity reliability, which shows a probability of the ridge directivity of the extracted pixel being consistent with the selected direction based on a difference between a density of the extracted pixel and densities of pixels neighboring to the extracted pixel in a direction orthogonal to the selected direction, as a reliability for each of the directions set in advance; and temporarily storing a corresponding relation between the directions set in advance and the reliabilities to a table of a memory, and

a function of searching a maximum value of the reliabilities from the table, and outputting the direction corresponding to the maximum value of the reliabilities as the ridge directivity of the pixel.

An example 5 describes a ridge direction extracting program for extracting a ridge directivity from an inputted fingerprint image or an inputted palm print image by a unit of pixel, the program allowing a microprocessor of a computer to execute

a function of: extracting a pixel one by one from the inputted image; sequentially selecting each direction from some directions set in advance for each pixel extracted from the image, and assuming that the ridge directivity of the extracted pixel is consistent with the selected direction; obtaining by each of the directions a directivity reliability, which shows a probability of the ridge directivity of the extracted pixel being consistent with the selected direction based on a difference between a density of the extracted pixel and densities of pixels neighboring to the extracted pixel in a direction orthogonal to the selected direction, as a reliability for each of the directions set in advance; and temporarily storing a corresponding relation between the directions set in advance and the reliabilities to a table of a memory,

a function of: obtaining a continuity reliability based on number of pixels from the extracted pixel having a same direction that is consistent with the selected direction; and adding a weight proportional to the continuity reliability by each of the selected directions to update a value of the reliability stored in the table by corresponding to the respective directions, and

a function of searching a maximum value of the updated reliabilities from the table, and outputting the direction corresponding to the maximum value of the reliabilities as the ridge directivity of the pixel.

An example 6 describes a ridge direction extracting program for extracting a ridge directivity from an inputted fingerprint image or an inputted palm print image by a unit of pixel, the program allowing a microprocessor of a computer to execute

a function of: extracting a pixel one by one from the inputted image; sequentially selecting each direction from some directions set in advance for each pixel extracted from the image, and assuming that the ridge directivity of the extracted pixel is consistent with the selected direction; obtaining by each of the directions a directivity reliability, which shows a probability of the ridge directivity of the extracted pixel being consistent with the selected direction based on a. difference between a density of the extracted pixel and densities of pixels neighboring to the extracted pixel in a direction orthogonal to the selected direction, as a reliability for each of the directions set in advance; and temporarily storing a corresponding relation between the directions set in advance and the reliabilities to a table of a memory,

a function of: obtaining a continuity reliability based on number of pixels continued from the extracted pixel having a same direction that is consistent with the selected direction; and adding a weight proportional to the continuity reliability by each of the selected directions to update a value of the reliability stored in the table by corresponding to the respective directions,

a function of: sequentially selecting each direction from the directions set in advance for each pixel extracted from the image, and assuming that the ridge directivity of the extracted pixel is consistent with the selected direction; obtaining a probability of having another ridge close to the extracted pixel in the direction orthogonal to the selected direction as a periodicity reliability; and adding a weight proportional to the periodicity reliability by each of the selected directions to further update values of the reliability stored in the table by corresponding to the respective directions, and

a function of searching a maximum value of the updated reliabilities from the table, and outputting the direction corresponding to the maximum value of the reliabilities as the ridge directivity of the pixel.

An example 7 describes a ridge direction extracting method for extracting a ridge directivity from an inputted fingerprint image or an inputted palm print image by a unit of pixel, the method comprising:

extracting a pixel one by one from the inputted image, sequentially selecting each direction from some directions set in advance for each pixel extracted from the image, and assuming that the ridge directivity of the extracted pixel is consistent with the selected direction;

obtaining by each of the directions a directivity, reliability, which shows a probability of the ridge directivity of the extracted pixel being consistent with the selected direction based on a difference between a density of the extracted pixel and densities of pixels neighboring to the extracted pixel in a direction orthogonal to the selected direction, as a reliability for each of the directions set in advance, and temporarily storing a corresponding relation between the directions set in advance and the reliabilities; and

searching a maximum value of the reliabilities, and determining the direction corresponding to the maximum value of the reliabilities as the ridge directivity of the pixel.

An example 8 describes a ridge direction extracting method for extracting a ridge directivity from an inputted fingerprint image or an inputted palm print image by a unit of pixel, the method comprising:

extracting a pixel one by one from the inputted image, sequentially selecting each direction from some directions set in advance for each pixel extracted from the image, and assuming that ridge directivity of the extracted pixel is consistent with the selected direction;

obtaining by each of the directions a directivity reliability, which shows a probability of the ridge directivity of the extracted pixel being consistent with the selected direction based on a difference between a density of the extracted pixel and densities of pixels neighboring to the extracted pixel in a direction orthogonal to the selected direction, as a reliability for each of the directions set in advance, and temporarily storing a corresponding relation between the directions set in advance and the reliabilities;

obtaining a continuity reliability based on number of pixels continued from the extracted pixel having a same direction that is consistent with the selected and adding a weight proportional to the continuity reliability by each of the selected directions to update a value of the reliability stored by corresponding to the respective directions; and

searching a maximum value of the updated reliabilities, and determining the direction corresponding to the maximum value of the reliabilities as the ridge directivity of the pixel.

An example 9 describes a ridge direction extracting method for extracting a ridge directivity from an inputted fingerprint image or an inputted palm print image by a unit of pixel, the method comprising:

extracting a pixel one by one from the inputted image, sequentially selecting each direction from some directions set in advance for each pixel extracted from the image, and assuming that ridge directivity of the extracted pixel is consistent with the selected direction, obtaining by each of the directions a directivity reliability, which shows a probability of the ridge directivity of the extracted pixel being consistent with the selected direction based on a difference between a density of the extracted pixel and densities of pixels neighboring to the extracted pixel in a direction orthogonal to the selected direction, as a reliability for each of the directions set in advance, and temporarily storing a corresponding relation between the directions set in advance and the reliabilities;

obtaining a continuity reliability based on number of pixels continued from the extracted pixel having a same direction that is consistent with the selected direction, and adding a weight proportional to the continuity reliability by each of the selected directions to update a value of the reliability stored by corresponding to the respective directions;

sequentially selecting each direction from the directions set in advance for each pixel extracted from the images, and assuming that the ridge directivity of the extracted pixel is consistent with the selected direction;

obtaining a probability of having another ridge close to the extracted pixel based on values of reliability of pixels neighboring to the extracted pixel in a the direction orthogonal to the selected direction as a periodicity reliability, and adding a weight proportional to the periodicity reliability by each of the selected directions to further update values of the reliability stored by corresponding to the respective directions; and
searching a maximum value of the updated reliabilities, and determining the direction corresponding to the maximum value of the reliabilities as the ridge directivity of the pixel.

In summary an embodiment of the invention is configured such as to extract the ridge directivities properly and precisely by suppressing a bad influence of noises having a periodicity. A ridge directivity is assumed along some direction codes set in advance, and the reliability indicating the probability of the assumed direction code being consistent with a valley is obtained for each direction code by a unit of pixel based on a difference between a density of a target pixel and densities of pixels neighboring to the target pixel in a direction orthogonal to the assumed direction code, and the direction having the maximum reliability is determined as the ridge directivity of the target pixel.

**Claims**

1. Ridge direction extracting means for extracting a ridge directivity from an inputted fingerprint image or an inputted palm print image by a unit of pixel, the device comprising
reliability extracting means for: sequentially selecting each direction from some directions set in advance for each pixel extracted from the image, and assuming that a ridge directivity of the extracted pixel is consistent with the selected direction; obtaining by each of the directions a directivity reliability, which shows a probability of the ridge directivity of the extracted pixel being consistent with the selected direction based on a difference between a grey level of the extracted pixel and grey levels of pixels neighboring to the extracted pixel in a direction orthogonal to the selected direction, as a reliability for each of the directions set in advance; and temporarily storing a corresponding relation between the directions set in advance and the reliabilities to a table of a memory,
periodicity evaluating means for: sequentially selecting each direction from the directions set in advance for each pixel extracted from the image, and assuming that the ridge directivity of the extracted pixel is consistent with the selected direction; obtaining a probability of having another ridge close to the extracted pixel based on values of reliability of pixels neighboring to the extracted pixel in the direction orthogonal to the selected direction as a periodicity reliability; and adding a weight proportional to the periodicity reliability by each of the selected directions to update values of the reliability stored in the table by corresponding to the respective directions, and
ridge direction determining means for searching a maximum value of the reliabilities from the table, and determining the direction corresponding to the maximum value of the reliabilities as the ridge directivity of the pixel.

2. The ridge direction extracting means as claimed in claim 1, comprising continuity evaluating means for: after the reliability extracting means temporarily stores the corresponding relation between the directions set in advance and the reliabilities to the table of the memory, and before the periodicity evaluating means operates, obtaining a continuity reliability based on number of pixels continued from the extracted pixel having a same direction that is consistent with the selected direction; and adding a weight proportional to the continuity reliability by each of the selected directions to update a value of the reliability stored in the table by corresponding to the respective directions.

3. A ridge direction extracting method for extracting a ridge directivity from an inputted fingerprint image or an inputted palm print image by a unit of pixels, the method comprising:

extracting a pixel one by one from the inputted image, sequentially selecting each direction from some directions set in advance for each pixel extracted from the image, and assuming that a ridge directivity of the extracted pixel is consistent with the selected direction, obtaining by each of the directions a directivity reliability, which shows a probability of the ridge directivity of the extracted pixel being consistent with the selected direction based on a difference between a grey level of the extracted pixel and grey levels of pixels neighboring to the extracted pixel in a direction orthogonal to the selected direction, as a reliability for each of the directions set in advance, and temporarily storing a corresponding relation between the directions set in advance and the reliabilities;
obtaining a continuity reliability based on number of pixels continued from the extracted pixel having a same direction that is consistent with the selected direction, and adding a weight proportional to the continuity reliability by each of the selected directions to update a value of the reliability stored by corresponding to the respective directions;
sequentially selecting each direction from the directions set in advance for each pixel extracted from the image, and assuming that the ridge directivity of the extracted pixel is consistent with the selected direction; and
searching a maximum value of the updated reliabilities, and determining the direction corresponding to the maximum value of the reliabilities as the ridge directivity of the pixel.

**4.** The ridge direction extracting method as claimed in claim 3, further comprising

after the temporarily storing the corresponding relation between the directions set in advance and the reliabilities and before obtaining the continuity reliability:

obtaining a probability of having another ridge close to the extracted pixel based on values of reliability of pixels neighboring to the extracted pixel in a the direction orthogonal to the selected direction as a periodicity reliability, and adding a weight proportional to the periodicity reliability by each of the selected directions to further update values of the reliability stored by corresponding to the respective directions.

**5.** A computer program comprising computer program code which when being executed on a computer enables said computer to carry out a method according to one of claims 3 to 4.


**Patentansprüche**

**1.** Rillenausrichtungs-Extraktionseinrichtung zum Extrahieren einer Rillenausrichtungscharakteristik von einem eingegebenen Fingerabdruckbild oder einem eingegebenen Handflächenabdruckbild durch eine Pixeleinheit, wobei die Vorrichtung umfasst:

eine Zuverlässigkeitsextraktionseinrichtung zum sequenziellen Auswählen jeder Ausrichtung aus einigen zuvor eingestellten Ausrichtungen für jedes aus dem Bild extrahierten Pixel und Unterstellen, dass eine Rillen-ausrichtungscharakteristik des extrahierten Pixels mit der ausgewählten Ausrichtung konsistent ist; Erhalten einer Ausrichtungscharakteristik-Zuverlässigkeit durch jede der Ausrichtungen, welche eine Wahrscheinlichkeit dafür zeigt, dass die Rillen-Ausrichtungscharakteristik des extrahierten Pixels mit der ausgewählten Ausrichtung konsistent ist, basierend auf einer Differenz zwischen einer Graustufe des extrahierten Pixels und Graustufen von Pixeln in der Nachbarschaft des extrahierten Pixels in einer Richtung orthogonal zu der ausgewählten Ausrichtung als eine Zuverlässigkeit für jede der zuvor eingestellten Ausrichtungen; und vorübergehendes Speichern einer entsprechenden Relation zwischen den zuvor eingestellten Ausrichtungen und den Zuverlässigkeiten in einer Tabelle eines Speichers, eine Periodizitäts-Evaluierungseinrichtung zum sequenziellen Auswählen jeder Ausrichtung aus den zuvor eingestellten Ausrichtungen für jedes aus dem Bild extrahierten Pixel und Unterstellen, dass die Rillen-ausrichtungscharakteristik des extrahierten Pixels mit der ausgewählten Ausrichtung konsistent ist; zum Erhalten einer Wahrscheinlichkeit dafür, dass eine andere Rille nahe dem extrahierten Pixel liegt, basierend auf Zuverlässigkeitswerten von Pixeln in der Nachbarschaft des extrahierten Pixels in der Richtung orthogonal zu der ausgewählten Ausrichtung als eine Periodizitäts-Zuverlässigkeit; und zum Addieren einer Gewichtung proportional zu der Periodizitäts-Zuverlässigkeit bei jeder der ausgewählten Ausrichtungen zu Aktualisierungswerten der Zuverlässigkeit, die in der Tabelle gespeichert sind, bei Entsprechung zu den jeweiligen Ausrichtungen, und eine Rillenausrichtungs-Bestimmungseinrichtung zum Suchen eines Maximalwerts der Zuverlässigkeiten aus der Tabelle und zum Bestimmen der Ausrichtung, die dem Maximalwert der Zuverlässigkeiten entspricht, als die Rillen-Ausrichtungscharakteristik des Pixels.

**2.** Rillenausrichtungs-Extraktionseinrichtung nach Anspruch 1, umfassend eine Kontinuitätsevaluierungseinrichtung, um, nachdem die Zuverlässigkeits-Extraktionseinrichtung vorübergehend die entsprechende Relation zwischen den zuvor eingestellten Ausrichtungen und den Zuverlässigkeiten in die Tabelle des Speichers gespeichert hat, und bevor die Periodizitäts-Evaluierungseinrichtung arbeitet, eine Kontinuitätszuverlässigkeit zu erhalten basierend auf einer Anzahl von Pixeln in Fortsetzung des extrahierten Pixels, die die gleiche Ausrichtung haben, die mit der ausgewählten Ausrichtung konsistent ist; und zum Addieren eines Gewichts proportional zu der Kontinuitäts-Zuverlässigkeit bei jeder der ausgewählten Ausrichtungen, um einen in der Tabelle gespeicherten Wert der Zuverlässigkeit bei Entsprechung zu den jeweiligen Ausrichtungen zu aktualisieren.

**3.** Rillenausrichtungs-Ektraktionsverfahren zum Extrahieren einer Rillenausrichtungscharakteristik aus einem eingegebenen Fingerabdruckbild oder einem eingegebenen Handflächenabdruckbild durch eine Pixeleinheit, wobei das Verfahren umfasst:

Extrahieren eines Pixels nach dem anderen aus dem eingegebenen Bild, sequenzielles Auswählen jeder Ausrichtung aus einigen zuvor eingestellten Ausrichtungen für jedes aus dem Bild extrahierte Pixel und Unterstellen, dass eine Rillen-Ausrichtungscharakteristik des extrahierten Pixels mit der ausgewählten Ausrichtung konsistent ist, Erhalten einer Ausrichtungscharakteristik-Zuverlässigkeit bei jeder der Ausrichtungen, welche eine Wahrscheinlichkeit dafür zeigt, dass die Rillen-Ausrichtungscharakteristik des extrahierten Pixels konsistent ist mit der ausgewählten Ausrichtung, basierend auf einer Differenz zwischen einer Graustufe des extrahierten Pixels und Graustufen von Pixeln in der Nachbarschaft des extrahierten Pixels in einer Ausrichtung orthogonal zu der ausgewählten Ausrichtung als eine Zuverlässigkeit für jede der zuvor ein gestellten Ausrichtungen, und vorübergehendes Speichern einer entsprechenden Relation zwischen den zuvor eingestellten Ausrichtungen und den Zuverlässigkeiten;

Erhalten einer Kontinuitäts-Zuverlässigkeit basierend auf einer Zahl von Pixeln in Fortsetzung des extrahierten Pixels, die die gleiche Ausrichtung haben, welche mit der ausgewählten Ausrichtung konsistent ist, und Addieren einer Gewichtung proportional zu der Kontinuitäts-Zuverlässigkeit bei jeder der ausgewählten Ausrichtungen zum Aktualisieren eines gespeicherten Werts der Zuverlässigkeit bei Entsprechung mit den jeweiligen Ausrichtungen;

sequenzielles Auswählen jeder Ausrichtung aus den zuvor eingestellten Ausrichtungen für jedes aus dem Bild extrahierte Pixel und Unterstellen, dass die Rillen-Ausrichtungscharakteristik des extrahierten Pixels mit der ausgewählten Ausrichtung konsistent ist; und

Suchen eines Maximalwerts der aktualisierten Zuverlässigkeiten und Bestimmen der Ausrichtung, die dem Maximalwert der Zuverlässigkeiten entspricht, als die Rillen-Ausrichtungscharakteristik des Pixels.

4. Rillenausrichtungs-Extraktionsverfahren nach Anspruch 3, ferner umfassend, nachdem die entsprechende Relation zwischen den zuvor eingestellten Ausrichtungen und den Zuverlässigkeiten gespeichert wurde, und bevor die Kontinuitäts-Zuverlässigkeit erhalten wird:

Erhalten einer Wahrscheinlichkeit dafür, dass eine andere Rille in der Nähe des extrahierten Pixels liegt, basierend auf Zuverlässigkeitswerten von Pixeln in der Nachbarschaft des extrahierten Pixels in einer Ausrichtung orthogonal zu der ausgewählten Ausrichtung als eine Periodizitäts-Zuverlässigkeit, und Addieren einer Gewichtung proportional zu der Periodizitäts-Zuverlässigkeit bei jeder der ausgewählten Ausrichtungen, um gespeicherte Werte der Zuverlässigkeit bei Entsprechung zu den jeweiligen Ausrichtungen weiter zu aktualisieren.

5. Computerprogramm, das Computerprogrammcode enthält, der beim Ausführen auf einem Computer den Computer in die Lage versetzt, ein Verfahren nach einem der Ansprüche 3 bis 4 auszuführen.

## Revendications

1. Moyen d'extraction de direction de crête pour extraire une directivité de crête à partir d'une image d'empreinte digitale entrée ou d'une image d'empreinte palmaire entrée par unité de pixel, le dispositif comprenant

un moyen d'extraction de fiabilité pour : sélectionner de façon séquentielle chaque direction parmi des directions établies à l'avance pour chaque pixel extrait de l'image, et supposer qu'une directivité de crête du pixel extrait est cohérente avec la direction sélectionnée ; obtenir par chacune des directions une fiabilité de directivité, qui montre qu'une probabilité de la directivité de crête du pixel extrait est cohérente avec la direction sélectionnée en se basant sur une différence entre un niveau de gris du pixel extrait et des niveaux de gris de pixels voisins du pixel extrait dans une direction orthogonale à la direction sélectionnée, en tant que fiabilité pour chacune des directions établies à l'avance ; et stocker temporairement une relation correspondante entre les directions établies à l'avance et les fiabilités dans une table de mémoire,

un moyen d'évaluation de périodicité pour : sélectionner de façon séquentielle chaque direction parmi les directions établies à l'avance pour chaque pixel extrait de l'image, et supposer que la directivité de crête du pixel extrait est cohérente avec la direction sélectionnée ; obtenir une probabilité d'avoir une autre crête proche du pixel extrait en se basant sur des valeurs de fiabilité de pixels voisins du pixel extrait dans la direction orthogonale à la direction sélectionnée en tant que fiabilité de périodicité ; et ajouter une pondération proportionnelle à la fiabilité de périodicité par chacune des directions sélectionnées afin de mettre à jour des valeurs de la fiabilité stockée dans la table par correspondance aux directions respectives, et

un moyen de détermination de direction de crête pour rechercher une valeur maximale des fiabilités de la table, et déterminer la direction correspondant à la valeur maximale des fiabilités en tant que directivité de crête du pixel.

2. Moyen d'extraction de direction de crête selon la revendication 1, comprenant un moyen d'évaluation de continuité pour : après que le moyen d'extraction de fiabilité stocke temporairement la relation correspondante entre les directions établies à l'avance et les fiabilités dans la table de mémoire, et avant que le moyen d'évaluation de périodicité fonctionne, obtenir une fiabilité de continuité en se basant sur un nombre de pixels continus à partir du pixel extrait ayant une même direction qui est cohérente avec la direction sélectionnée ;

et ajouter une pondération proportionnelle à la fiabilité de continuité par chacune des directions sélectionnées afin de mettre à jour une valeur de la fiabilité stockée dans la table par correspondance avec les directions respectives.

3. Procédé d'extraction de direction de crête pour extraire une directivité de crête à partir d'une image d'empreinte digitale entrée ou d'une image d'empreinte palmaire entrée par unité de pixel, le procédé comprenant :

    extraire un pixel un par un à partir de l'image entrée, la sélection séquentielle de chaque direction parmi des directions établies à l'avance pour chaque pixel extrait de l'image, et la supposition qu'une directivité de crête du pixel extrait est cohérente avec la direction sélectionnée, l'obtention par chacune des directions d'une fiabilité de directivité, qui montre qu'une probabilité de la directivité de crête du pixel extrait est cohérente avec la direction sélectionnée en se basant sur une différence entre un niveau de gris du pixel extrait et des niveaux de gris de pixels voisins du pixel extrait dans une direction orthogonale à la direction sélectionnée, en tant que fiabilité pour chacune des directions établies à l'avance ; et le stockage temporaire d'une relation correspondante entre les directions établies à l'avance et les fiabilités,

obtenir une fiabilité de continuité en se basant sur un nombre de pixels continus à partir du pixel extrait ayant une même direction qui est cohérente avec la direction sélectionnée, et l'ajout d'une pondération proportionnelle à la fiabilité de continuité par chacune des directions sélectionnées afin de mettre à jour une valeur de la fiabilité stockée par correspondance aux directions respectives :

    sélectionner séquentielle chaque direction parmi les directions établies à l'avance pour chaque pixel extrait de l'image, et la supposition que la directivité de crête du pixel extrait est cohérente avec la direction sélectionnée ; et

rechercher une valeur maximale des fiabilités mises à jour, et la détermination de la direction correspondant à la valeur maximale des fiabilités en tant que directivité de crête du pixel.

4. Procédé d'extraction de direction de crête selon la revendication 3, comprenant en outre après le stockage temporaire de la relation correspondante entre les directions établies à l'avance et les fiabilités et avant l'obtention de la fiabilité de continuité :

    obtenir une probabilité d'avoir une autre crête proche du pixel extrait en se basant sur des valeurs de fiabilité de pixels voisins du pixel extrait dans la direction orthogonale à la direction sélectionnée en tant que fiabilité de périodicité, et ajouter une pondération proportionnelle à la fiabilité de périodicité par chacune des directions sélectionnées afin de davantage mettre à jour des valeurs de la fiabilité stockées par correspondance aux directions respectives.

5. Programme informatique comprenant un code de programme informatique qui, lorsqu'il est exécuté sur un ordinateur, permet audit ordinateur de réaliser un procédé selon l'une quelconque des revendications 3 à 4.

# FIG. 1

# FIG. 2

```
              2
      ┌──────────────────┐
      │   FINGERPRINT    │
      │   IMAGE INPUT    │── 3
      │     DEVICE       │
      └──────────────────┘
               │
               ▼
      ┌──────────────────┐
      │   DIRECTION      │── 1
      │   EXTRACTING     │
      │     DEVICE       │
      └──────────────────┘
               │
               ▼
      ┌──────────────────┐
      │     RIDGE        │── 4
      │   EXTRACTING     │
      │     DEVICE       │
      └──────────────────┘
               │
               ▼
      ┌──────────────────┐
      │    MINUTIA       │── 5
      │   EXTRACTING     │
      │     DEVICE       │
      └──────────────────┘
               │
               ▼
      ┌──────────────────┐
      │    MINUTIA       │── 6
      │  OUTPUT DEVICE   │
      └──────────────────┘
```

# FIG. 3

# FIG. 4

# FIG. 5

# FIG. 6A

# FIG. 6B

# FIG. 7A    FIG. 7B    FIG. 7C

r=6 (3/8 π)    r=3 (3/16 π)

# FIG. 8A　　FIG. 8B　　FIG. 8C

r=6 (3/8 $\pi$ )　　r=3 (3/16 $\pi$ )

FIG. 9A     FIG. 9B     FIG. 9C

r=6 (3/8 π)     r=3 (3/16 π)

FIG. 10A

FIG. 10B

# FIG. 11

# FIG. 12

# FIG. 13

Cr(x,y)

| r | (DIRECTIONS) | C | C2 | dF | eF |
|---|---|---|---|---|---|
| 0 | $0\,\pi$ | C(0) | C2(0) | dF(0) | eF(0) |
| 1 | $1/16\,\pi$ | C(1) | C2(1) | dF(1) | eF(1) |
| 2 | $1/8\,\pi$ | C(2) | C2(2) | dF(2) | eF(2) |
| 3 | $3/16\,\pi$ | C(3) | C2(3) | dF(3) | eF(3) |
| 4 | $1/4\,\pi$ | C(4) | C2(4) | dF(4) | eF(4) |
| 5 | $5/16\,\pi$ | C(5) | C2(5) | dF(5) | eF(5) |
| 6 | $3/8\,\pi$ | C(6) | C2(6) | dF(6) | eF(6) |
| 7 | $7/16\,\pi$ | C(7) | C2(7) | dF(7) | eF(7) |
| 8 | $1/2\,\pi$ | C(8) | C2(8) | dF(8) | eF(8) |
| 9 | $9/16\,\pi$ | C(9) | C2(9) | dF(9) | eF(9) |
| 10 | $5/8\,\pi$ | C(10) | C2(10) | dF(10) | eF(10) |
| 11 | $11/16\,\pi$ | C(11) | C2(11) | dF(11) | eF(11) |
| 12 | $3/4\,\pi$ | C(12) | C2(12) | dF(12) | eF(12) |
| 13 | $13/16\,\pi$ | C(13) | C2(13) | dF(13) | eF(13) |
| 14 | $7/8\,\pi$ | C(14) | C2(14) | dF(14) | eF(14) |
| 15 | $15/16\,\pi$ | C(15) | C2(15) | dF(15) | eF(15) |
| RIDGE DIRECTION | | r(R1) | | | |
| RELIABILITY | | eF(R1)—eF(RV) | | | |

# FIG. 14

START

IMAGE INPUT PROCESSING — a1

NORMALIZING PROCESSING — a2

$y \leftarrow 0$ — a3

$x \leftarrow 0$ — a4

a5 — READ DENSITY OF $(x,y)$

a6 — GREATER DENSITY THAN NEIGHBORING PIXELS ?

Y → a15 — $x = X$ → a17 — $y = Y$

a16 — $x \leftarrow x+1$    a18 — $y \leftarrow y+1$

N — GENERATE $Cr(x,y)$ — a7

$i \leftarrow 0$ — a8

a9 — READ DENSITY OF TWO PIXELS SANDWICHING PIXEL $(x,y)$ IN DIRECTION ORTHOGONAL TO $r(i)$

OBTAIN $C(i)$ — a10

a11 — $C(i) > 0$

Y — a12 — REGISTER $C(i)$ TO $Cr(x,y)$

a13 — $i = 15$

N — $i \leftarrow i+1$ — a14

(a)

# FIG. 15

(a)

y ← 0 — a19

x ← 0 — a20

x ← x+1 — a35

y ← y+1 — a37

Cr(x,y) BEING REGISTERED ? — a21 — N

x = X — a34 — N

y = Y — a36 — N

Y

Y

(b)

Y

READ Cr(x,y) — a22

i ← 0 — a23

C(i) BEING REGISTERED ? — a24 — N

Y

CALCULATE MEAN VALUE OF RELIABILITIES OF r(i) OF FOUR PIXELS LINED IN r(i) DIRECTION BY SANDWICHING PIXEL (x,y) — a25

PERFORM SKELETONIZATION IN r(i) DIRECTION — a26

CONTINUOUS PIXEL NUMBER → L — a27

a28 — $L \leqq 8$ — N

a29 — Y

CANCEL DATA OF i — a29

$C2(i) \leftarrow C(i) \times L/100$ — a30

REGISTER C2(i) — a31

a32 — i=15 — Y

N

i ← i+1 — a33

41

# FIG. 16

# FIG. 17

```
                              c

                         y ← 0        a56

                         x ← 0        a57
                                                          a66              a68
                                                    x ← x+1           y ← y+1
                                          a58
              Cr(x,y)                      N    N    a65         N    a67
          BEING REGISTERED ?                          x = X            y = Y
                                                            Y               Y
                         Y
                                                                      e
                    READ Cr(x,y)       a59

                         i ← 0        a60

                                          a61
                   dF(i)                    N
              BEING REGISTERED ?

                         Y                a62

                UPDATE C2(i) WITH
                   dF → eF(i)

                                          a63
                     i=15          Y

                         N

                     i ← i+1          a64
```

# FIG. 18

(d)

y ← 0  — a69

x ← 0  — a70

x ← x+1  a88

y ← y+1  a90

Cr(x,y) BEING REGISTERED ?  — a71

N

x = X  a87

N

y = Y  a89

N

Y

Y

(e)

READ Cr(x,y)  — a72

i ← 0  — a73

eF ← 0  — a74

eF(i) BEING REGISTERED ?  — a75

N

Y

eF(i) > eF  a76

N

Y

a77 — eF ← eF(i)

a78 — R1 ← i

a79 — i=15

Y

N

a80 — i ← i+1

STORE r(R1) AS RIDGE DIRECTION OF Cr(x,y)  a81

a82 — READ eF(RV) OF DIRECTION ORTHOGONAL TO r(R1)

a83 — eF(R1)-eF(RV)→DIRECTION RELIABILITY OF Cr(x,y)

DIRECTION RELIABILITY > SET VALUE ?  a84

N

Y

REGISTER RIDGE DIRECTION AND DIRECTION RELIABILITY  a85

a86

REGISTER AS DIRECTION UNKNOWN

# FIG. 19

```
                    ( e )
                      │
                      ▼
              ┌───────────────┐
              │     y ← 0     │──── a91
              └───────────────┘
                      │
                      │◄─────────────────────┐
                      ▼                       │
              ┌───────────────┐               │
              │     x ← 0     │──── a92       │
              └───────────────┘               │
                      │                       │
                      │◄──────────┐           │
                      ▼           │           │
        ┌─────────────────────────┐           │
        │      READ Cr(x,y)       │──── a93   │
        └─────────────────────────┘           │
                      │                       │
                      ▼      a94              │
                  ╱───────────╲               │
                 ╱  DIRECTION  ╲              │
                ╱   UNKNOWN ?    ╲── N ───┐    │
                ╲               ╱         │    │
                 ╲─────────────╱          │    │
                      │ Y                 │    │
                      ▼         a95       │    │
    a97       ┌───────────────┐           │    │
 ┌─────────┐  │    LABELING   │           │    │
 │ x ← x+1 │  └───────────────┘           │    │
 └─────────┘          │◄─────────────────┘     │
      ▲               ▼      a96               │
      │           ╱───────────╲                │
      │          ╱    x = X     ╲── N ──────┐   │
      │          ╲             ╱            │   │
      └───────────╲───────────╱             │   │
                      │ Y                   │   │
                      ▼      a98     a99     │   │
                  ╱───────────╲  ┌─────────┐│   │
                 ╱    y = Y     ╲─│ y ← y+1 ││   │
                 ╲             ╱ N└─────────┘│   │
                  ╲───────────╱              │   │
                      │ Y                    │   │
                      ▼          a100        │   │
        ┌─────────────────────────┐          │   │
        │  PERFORM KNOWN PROCESSING│         │   │
        │     ON LABELED PIXEL    │          │   │
        └─────────────────────────┘          │   │
                      │                      │   │
                      ▼                      │   │
                 (  END  )                   │   │
```

**REFERENCES CITED IN THE DESCRIPTION**

**Patent documents cited in the description**

- JP 2008079294 A
- JP 52097298 A
- JP 8007097 A
- JP 2002288641 A
- JP 2007065900 A

**Non-patent literature cited in the description**

- **M. LIU et al.** Fingerprint reference-point detection. *EURASIP Journal on Applied Signal Processing,* 2005, vol. 4, 498-509
- **M.H.G. YAZDI.** A robust structural fingerprint restoration. *Lecture Notes in Computer Science,* 1997, vol. 1311, 544-551
- Feature Extraction in Fingerprint Images. **SHEN et al.** Automatic Fingerprint Recognition Systems. 2004, 170-174